(19) **Europäisches Patentamt / European Patent Office / Office européen des brevets**

(11) **EP 2 617 984 A1**

(12) **EUROPEAN PATENT APPLICATION**
published in accordance with Art. 153(4) EPC

(43) Date of publication:
**24.07.2013 Bulletin 2013/30**

(51) Int Cl.:
*F02P 5/15* (2006.01)   *F02B 29/08* (2006.01)
*F02D 13/02* (2006.01)   *F02D 21/08* (2006.01)
*F02D 41/04* (2006.01)   *F02D 43/00* (2006.01)
*F02D 45/00* (2006.01)

(21) Application number: **11825012.5**

(22) Date of filing: **05.09.2011**

(86) International application number:
**PCT/JP2011/070120**

(87) International publication number:
**WO 2012/036006 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010   JP 2010209644**

(71) Applicant: **Hitachi Automotive Systems, Ltd.**
**Hitachinaka-shi**
**Ibaraki 312-8503 (JP)**

(72) Inventors:
- **SUZUKI Kunihiko**
  **Hitachi-shi**
  **Ibaraki 319-1292 (JP)**
- **ASANO Seiji**
  **Hitachinaka-shi**
  **Ibaraki 312-8503 (JP)**

(74) Representative: **MERH-IP**
**Matias Erny Reichl Hoffmann**
**Paul-Heyse-Strasse 29**
**80336 München (DE)**

(54) **METHOD FOR CONTROLLING AND DEVICE FOR CONTROLLING INTERNAL COMBUSTION ENGINE**

(57)   Because opening of a flow enhancement valve affects not only a flow but also a flow rate, when the opening of the flow enhancement valve is transiently changed, if an ignition correction control is conducted on the basis of a relationship obtained in a steady operation state of the flow enhancement valve opening and the ignition timing, there occurs such a drawback that the ignition timing is set to a retard side or an advance side of the optimal point. In a control device for an internal combustion engine having a flow enhancement valve, an intake air quantity flowing into a cylinder is calculated on the basis of the intake air quantity detected by an air flow sensor, a rotating speed, and an operating state of the flow enhancement valve, a turbulent intensity index within the cylinder is calculated on the basis of the rotating speed, the intake air quantity flowing into the cylinder, and the operating state of the flow enhancement valve, and an ignition timing is calculated on the basis of the rotating speed, the intake air quantity flowing into the cylinder, and the turbulent intensity index.

FIG.12

## Description

Technical Field

The present invention relates to a control device and a control method for an internal combustion engine, and, for example, relates to a control device and a control method for an internal combustion engine, which include a flow enhancement valve, and control an ignition timing and a fuel injection quantity.

Background Art

In an internal combustion engine having a flow enhancement valve, when the flow enhancement value is adjusted to an intermediate opening, the ignition timing is delayed from a base ignition timing used in a fully opened state to avoid a drawback that a pressure peak value of a combustion chamber is made earlier than an optimum timing. Also, the ignition timing is retarded more as the intermediate opening of the flow enhancement valve is closer to a fully opened state, and the pressure peak value is delayed from an optimal timing. In this way, a technique has been disclosed in which the base ignition timing is corrected according to the intermediate opening of the flow enhancement valve so that a power efficiency of an engine can be sufficiently enhanced (refer to Patent Literature 1).

Citation List

Patent Literature

Patent Literature1: Japanese Unexamined Patent Application Publication No. 2009-24684

Summary of Invention

Technical Problem

However, at an operating point with a relatively high rotating speed and high load so that the flow enhancement valve is adjusted the intermediate opening, the opening of the flow enhancement valve largely affects not only a flow but also a flow rate. For that reason, when the opening of the flow enhancement valve is transiently changed, if an ignition correction control is conducted on the basis of a relationship obtained in a steady operation state of the flow enhancement valve opening and the ignition timing, there occurs such a drawback that the ignition timing is set to a retard side or an advance side of the optimal point. Further, when the opening of the flow enhancement valve is transiently changed, the quantity of air charged within a cylinder is transiently changed due to a hydrodynamic influence within an intake pipe. This results in such a problem that a fuel injection quantity is set to a rich side or a lean side of a theoretical air fuel ratio.

The present invention has been made in view of the above viewpoints, and an object of the present invention is to provide a control device and a control method for an internal combustion engine, which can suitably control an ignition timing and/or a fuel injection quantity when a flow enhancement valve is transiently changed in the internal combustion engine having the flow enhancement valve.

Solution to Problem

In order to achieve the above object, according to the present invention, there is provided a control device for an internal combustion engine, basically having a flow enhancement valve, the control device including: an intake air quantity calculation unit that calculates an intake air quantity flowing into a cylinder on the basis of the intake air quantity detected by an air flow sensor, a rotating speed, and an operating state of the flow enhancement valve; a turbulent intensity calculation unit that calculates an index of a turbulent intensity within the cylinder on the basis of the rotating speed, the intake air quantity flowing into the cylinder, and the operating state of the flow enhancement valve; and an ignition timing calculation unit that calculates an ignition timing on the basis of the rotating speed, the intake air quantity flowing into the cylinder, and the turbulent intensity index.

Advantageous Effects of Invention

According to the present invention, even when the opening of the flow enhancement valve is transiently changed, the ignition timing can be suitably controlled taking the intake air quantity flowing into the cylinder and the transient behavior of the turbulent intensity index within the cylinder into consideration. For that reason, a fuel consumption, a power, and an exhaust performance of the internal combustion engine when the opening of the flow enhancement valve is transiently changed can be prevented from being deteriorated. Brief Description of Drawings

[FIG. 1] FIG. 1 is a diagram illustrating an overall system configuration of an internal combustion engine to which a control device for the internal combustion engine according to an embodiment of the present invention is applied.
[FIG. 2] FIG. 2 is a diagram illustrating a change in an overlap period of an intake valve and an exhaust valve, and a change in an intake valve close timing (IVC: intake valve close) when a phase of the intake valve is continuously changed.
[FIG. 3] FIG. 3 is a diagram illustrating a valve lift pattern of a variable lift mechanism which can change an operating angle and a lift of a valve at the same time.
[FIG. 4] FIG. 4 is a diagram illustrating a valve mechanism having a flow enhancement function for enhancing a flow within a cylinder with asymmetric lift pattern of the valve.
[FIG. 5] FIG. 5 is a diagram illustrating a configuration of an intake pipe and physical quantities of respective parts in the internal combustion engine.
[FIG. 6] FIG. 6 is a diagram illustrating a control map of a flow enhancement valve.
[FIG. 7] FIG. 7 is a diagram illustrating processes for generating and damping a flow and a turbulence within a cylinder which are formed in a gas exchange process.
[FIG. 8] FIG. 8 is a diagram illustrating a mechanism of an influence of the flow enhancement valve on a turbulent enhancement in the vicinity of a compression top dead center.
[FIG. 9] FIG. 9 is a diagram illustrating an influence of states of the flow enhancement valve and a variable valve on a transition of turbulence within the cylinder.
[FIG. 10] FIG. 10 is a diagram illustrating relationships of the flow enhancement valve opening and a charging efficiency, and relationships of the flow enhancement valve opening and a compression top dead center turbulent intensity at operating points A and B different in a rotating speed and an intake pipe pressure.
[FIG. 11] FIG. 11 is a diagram illustrating relationships of the flow enhancement valve opening and a turbulent combustion speed, and relationships of the flow enhancement valve opening and the ignition timing at the operating points A and B different in the rotating speed and the charging efficiency.
[FIG. 12] FIG. 12 is a control block diagram for conducting an ignition timing control when the flow enhancement valve is changed in a control device for an internal combustion engine according to an embodiment of the present invention.
[FIG. 13] FIG. 13 is a control block diagram for a fuel injection quantity control when the flow enhancement valve is changed according to another embodiment of the present invention.
[FIG. 14] FIG. 14 is a diagram illustrating the transitions of a mass flow rate, a compression top dead center turbulent intensity, an ignition timing, a fuel injection quantity, and an air fuel ratio with time, immediately after the flow enhancement valve is precipitously closed, with reference to the control block diagrams illustrated in FIGS. 12 and 13.
[FIG. 15] FIG. 15 is a diagram illustrating the transitions of the mass flow rate, the compression top dead center turbulent intensity, the ignition timing, the fuel injection quantity, and the air fuel ratio with time, immediately after the flow enhancement valve is precipitously closed, with reference to the control block diagrams illustrated in FIGS. 12 and 13.
[FIG. 16] FIG. 16 is a diagram illustrating an influence of the variable valve on the relationship of the flow enhancement valve opening and the charging efficiency, and the relationship of the flow enhancement valve opening and the compression top dead center turbulent intensity at the operating points A and B different in the rotating speed and the intake pipe pressure.
[FIG. 17] FIG. 17 is a control block diagram for conducting an ignition timing control when the flow enhancement valve is changed, taking into account an influence of interaction of the operating point and the variable valve on the relationship of the flow enhancement valve opening and the charging efficiency, and the relationship of the flow enhancement valve opening and the compression top dead center turbulent intensity according to still another embodiment of the present invention.
[FIG. 18] FIG. 18 is a control block diagram for conducting a fuel injection quantity control when the flow enhancement valve is changed, taking into account an influence of interaction of the operating point and the variable valve on the relationship of the flow enhancement valve opening and the charging efficiency, and the relationship of the flow enhancement valve opening and the compression top dead center turbulent intensity according to yet still another embodiment of the present invention.
[FIG. 19] FIG. 19 is a diagram illustrating the transitions of the mass flow rate, the compression top dead center turbulent intensity, the ignition timing, the fuel injection quantity, and the air fuel ratio with time, immediately after the flow enhancement valve is precipitously closed, when a low rotating speed and an intake variable valve are set on a retard side (corresponding to a hatched portion in FIG. 16), with reference to the control block diagrams illustrated in FIGS. 17 and 18.

[FIG. 20] FIG. 20 is a diagram illustrating the transitions of the mass flow rate, the compression top dead center turbulent intensity, the ignition timing, the fuel injection quantity, and the air fuel ratio with time, immediately after the flow enhancement valve is precipitously closed, when the low rotating speed and the intake variable valve are set on the retard side (corresponding to the hatched portion in FIG. 16), with reference to the control block diagrams illustrated in FIGS. 17 and 18.

[FIG. 21] FIG. 21 is a control block diagram for conducting a cooperation control of the flow enhancement valve opening and the ignition timing according to further yet still another embodiment.

DESCRIPTION OF EMBODIMENTS

Hereinafter, a description will be given of a control device for an internal combustion engine according to embodiments of the present invention with reference to the drawings.

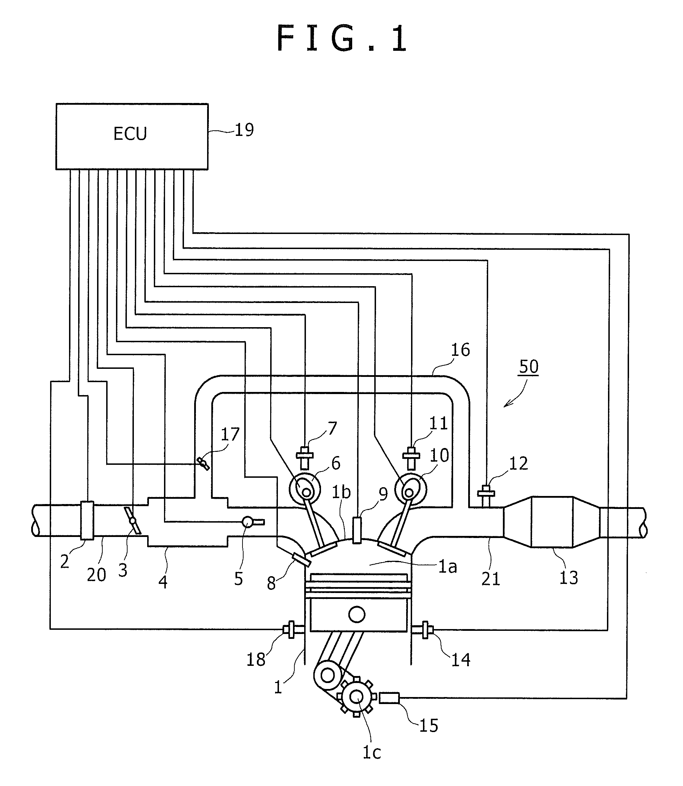

FIG. 1 is a diagram illustrating an overall system configuration of an internal combustion engine to which a control device for the internal combustion engine according to an embodiment of the present invention is applied. An internal combustion engine 50 having the system configuration according to this embodiment includes an intake passage 20 and an exhaust passage 21. The intake passages 20 and 21 are communicated with each other. The intake passage 20 is equipped with an intake temperature sensor 2 also serving as an air flow sensor, and a throttle valve 3 is disposed downstream of the intake temperature sensor 2. The throttle valve 3 is configured as an electrically-controlled throttle valve that can a throttle opening independent from the press-down quantity of an accelerator.

An intake manifold 4 is disposed downstream of the throttle valve 3, and a flow enhancement valve 5 that enhances the turbulence of a flow into a cylinder 1 by drifting an intake air is disposed downstream of the intake manifold 4.

The internal combustion engine 50 is equipped with an intake valve 6 having a variable valve mechanism, and a position sensor 7 for detecting a valve timing or a maximum lift is assembled in the variable valve mechanism of the intake valve 6. Also, the internal combustion engine 50 includes an exhaust valve 10, and the exhaust valve 10 is equipped with a variable valve mechanism having a variable exhaust valve timing, and a position sensor 11 that detects a timing of the exhaust valve 10 is assembled in the variable valve mechanism.

A fuel injection valve 8 that injects a fuel is assembled into the cylinder 1 of the internal combustion engine 50. Also, an ignition plug 9 having an electrode portion exposed to a combustion chamber 1a within the cylinder 1 is assembled in a head portion 1b of the cylinder 1.

An air-fuel ratio sensor 12 is assembled in the exhaust passage 21. The internal combustion engine 50 is designed to feedback-control a fuel injection quantity, which is supplied from the fuel injection valve 8, to become a theoretical air-fuel ratio, on the basis of a detection result of the air-fuel ratio sensor 12. An exhaust purification catalyst 13 is communicated with the middle of the exhaust passage 21, and purifies nitrogen oxide, carbon monoxide, and unburned hydrocarbon, which are toxic emissions exhausted from the cylinder 1 of the internal combustion engine 50.

Further, a knock sensor 14 that detects the occurrence of a knock is assembled in the cylinder 1, and when the knock is detected, the occurrence of the knock is avoided by retarding the ignition timing. A crank angle sensor 15 is assembled in a crank shaft 1c of the internal combustion engine 50. A rotating speed of the internal combustion engine 50 is detected on the basis of an output signal from the crank angle sensor 15.

The internal combustion engine 50 of the system according to this embodiment is equipped with an external EGR pipe 16 for allowing a part of the exhaust gas in the exhaust passage 21 back to the intake passage 20, and an external EGR valve 17 for controlling the external EGR flow rate. During partial load operation, the external EGR valve 17 is opened to conduct EGR whereby a pumping loss and the exhaust of nitrogen oxide can be reduced.

A circulating water temperature sensor 18 for detecting a warm-up state of the internal combustion engine 50 is assembled in the cylinder 1 of the internal combustion engine 50, and the internal combustion engine 50 conducts a retard correction control of the ignition timing in order to early raise the exhaust purification catalyst 13 up to a catalyst activating temperature on the basis of the circulating water temperature detected by the circulating water temperature sensor 18, and an elapsed time after starting, immediately after starting.

As illustrated in FIG. 1, the internal combustion engine 50 in the system according to this embodiment includes an ECU (electronic control unit) 19. The ECU 19 is connected with the above-mentioned various sensors, receives signals of the various sensors, and is connected with control actuators of the throttle valve 3, the fuel injection valve 8, the intake valve 6 with the variable mechanism, and the exhaust valve 10 with the variable valve mechanism, which are controlled by the ECU 19.

Also, the internal combustion engine 50 detects an operation state on the basis of the signals input from the above-mentioned various sensors, injects a fuel through the fuel injection valve 8 at a timing determined by the ECU 19 according to the operation state, and controls ignition to the ignition plug 9.

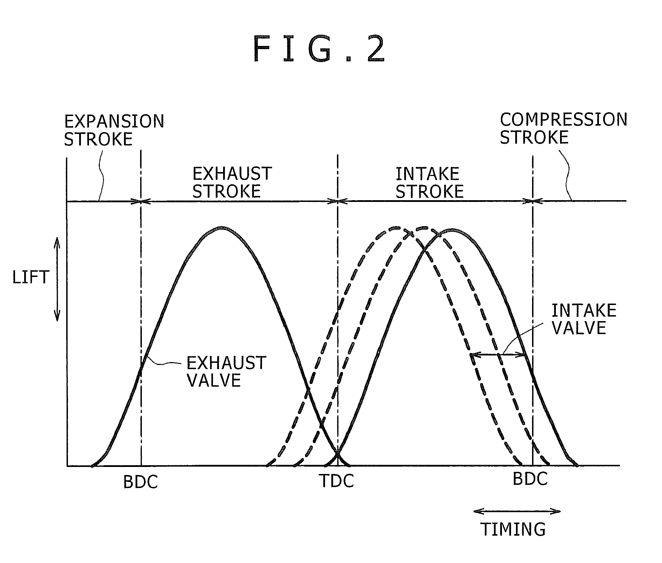

FIG. 2 is a diagram illustrating a change in an overlap period of the intake valve 6 and the exhaust valve 10, and a change in an intake valve close timing (IVC: intake valve close) when a phase of the intake valve 6 is continuously changed according to this embodiment. The overlap period with the exhaust valve 10 is increased more as the phase of the intake valve 6 is changed more toward the advance side.

In general, in the internal combustion engine 50 having the variable valve, the variable valve is controlled so that the above overlap period occurs under a partial load condition, and the internal EGR is generated by blowing the exhaust gas in the exhaust pipe back into the intake pipe to generate the internal EGR. With an increase of the internal EGR, the pumping loss under the partial load condition can be reduced, and a combustion gas temperature can be reduced with the result that nitrogen oxide in the exhaust gas can be reduced.

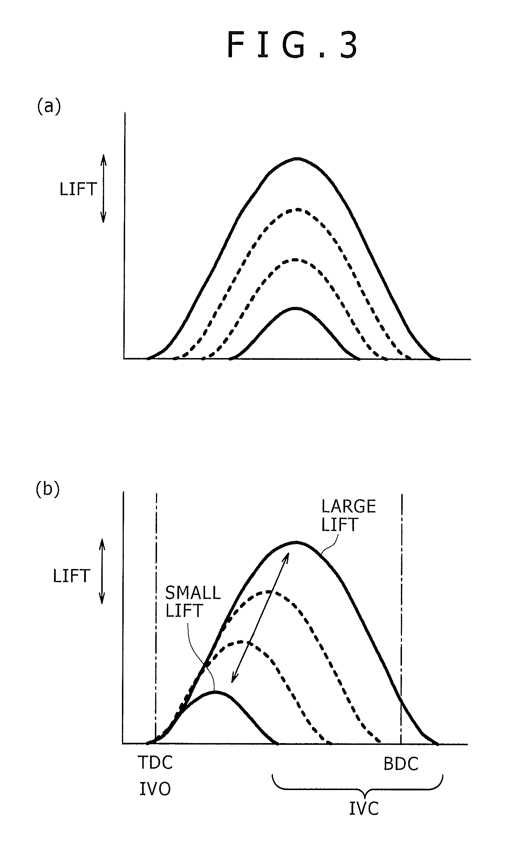

FIG. 3(a) is a diagram illustrating a valve lift pattern of the variable valve mechanism which can change an operating angle and the lift of the valve at the same time. In the internal combustion engine that controls the charging efficiency mainly by the conventional throttle valve, an upstream pressure of the intake valve is throttled by the throttle valve to generate a negative pressure. This results in a problem that fuel economy is reduced. If the intake quantity can be controlled by the open/close timing of the intake valve without throttling the upstream pressure of the intake valve, the pumping loss can be reduced, and the reduction in the fuel economy can be suppressed.

In a state of the variable valve illustrated in FIG. 3(b), a variable valve combining a lift variable mechanism that can continuously change the valve lift, and a phase variable mechanism that can continuously change the phase together is used as the intake valve. A valve close timing (IVC) is changed while a valve open timing (IVO) is fixed. With the provision of the above variable valve mechanism, the internal combustion engine that controls the charging efficiency mainly by the variable valve can be realized.

The lift variable mechanism has a relationship that the maximum lift is increased more as the valve operating angle is increased more, and the IVC can be accelerated to decrease the intake quantity while the lift quantity is decreased when a requested torque is small. In this situation, since a piston compression quantity can be relatively decreased as compared with a piston expansion quantity by accelerating the IVC, an advantage of an improvement in the fuel consumption due to the miller cycle effect can be expected can be expected in addition to a reduction in the pumping loss.

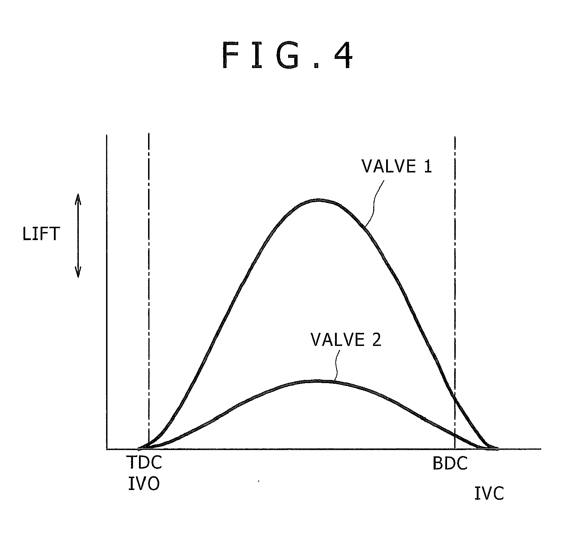

FIG. 4 is a diagram illustrating a valve mechanism having a flow enhancement function for enhancing a flow within the cylinder with asymmetric lift pattern of the valve. One of two valves is made lower in the lift, to thereby drift a gas passing through both of those valves. If the above valve mechanism is applied to the intake valve, large swirls in a lateral direction or a longitudinal direction (swirls in the lateral direction are called "swirl flow", and swirls in the longitudinal direction are called "tumble flow") can be formed in the flow within the cylinder in an intake stroke. The large swirls formed during the intake stroke are sequentially collapsed into small swirls during a compression stroke, and eventually bears the aspect of a cascade process of a turbulent energy to be scattered into a thermal energy. The swirl flow or the tumble flow functions to suppress scattering of the turbulent energy, as a result of which the turbulent energy at a late stage of the compression stroke can be increased.

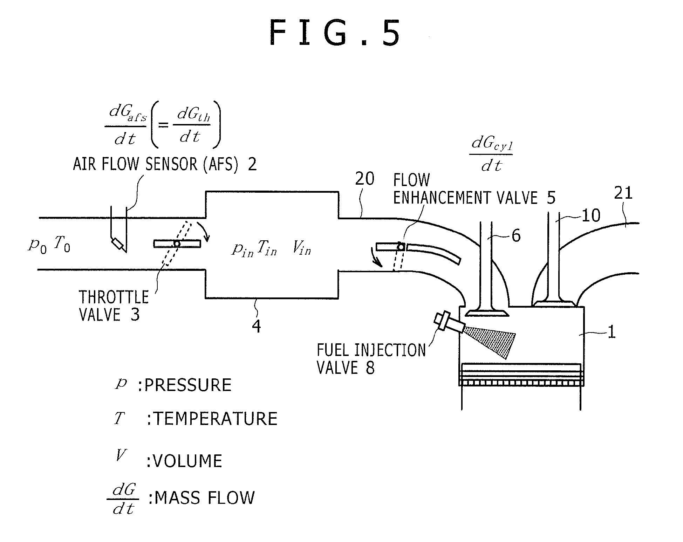

FIG. 5 is a diagram illustrating a configuration of an intake pipe and physical quantities of a fluid passing through respective parts of the intake pipe in the internal combustion engine. The intake temperature sensor 2 is fitted upstream of the throttle valve 3, and an atmospheric temperature is detected by a temperature sensor incorporated into the intake temperature sensor 2.

Also, the flow rate of a gas passing through an opening portion of the throttle valve 3 can be considered to be substantially identical with an air flow sensor flow rate detected by the intake temperature sensor 2. In the system according to this embodiment, the flow enhancement valve 5 is located upstream of the intake valve 6. An intake flow is drifted by closing the flow enhancement valve 5 to enhance the turbulence at a late stage of the compression stroke.

The flow rate of the gas flowing into the cylinder 1 can be estimated on the basis of a pressure and a temperature downstream of the throttle valve 3, a rotating speed, a variable valve operating quantity, and the opening of the flow enhancement valve.

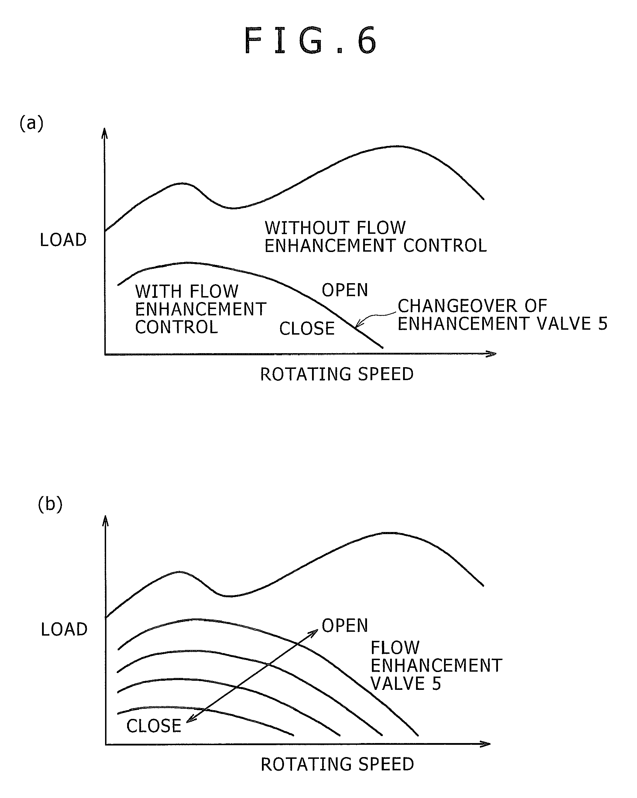

FIG. 6 is a diagram illustrating a control map of the flow enhancement valve 5, and the flow enhancement valve 5 is controlled on the basis of a control map with the rotating speed and a load as its axes.

In FIG. 6(a), the flow enhancement valve 5 is set at a closed side in an operating area of a low rotating speed and a low load, and the flow enhancement valve 5 is set at an open side in an operating area of a high rotating speed and a high load. A switching control is conducted between those operating areas. In the internal combustion engine 50 applying a system that conducts the switching control of the flow enhancement valve 5 in this way, the operating area of the flow enhancement valve 5 is normally limited to the low-rotating and low-load area in which an influence of the flow enhancement valve 5 on the intake air quantity is relatively small.

On the other hand, in FIG. 6(b), the flow enhancement valve is set at a more closed side as the rotating speed is lower, and the load is lower, and the flow enhancement valve 5 is set at a more open side as the rotating speed is higher, and the load is higher. In this way, the opening of the flow enhancement valve 5 is continuously changed to more enlarge the operating area in which the flow enhancement valve 5 is actuated than the switching control system.

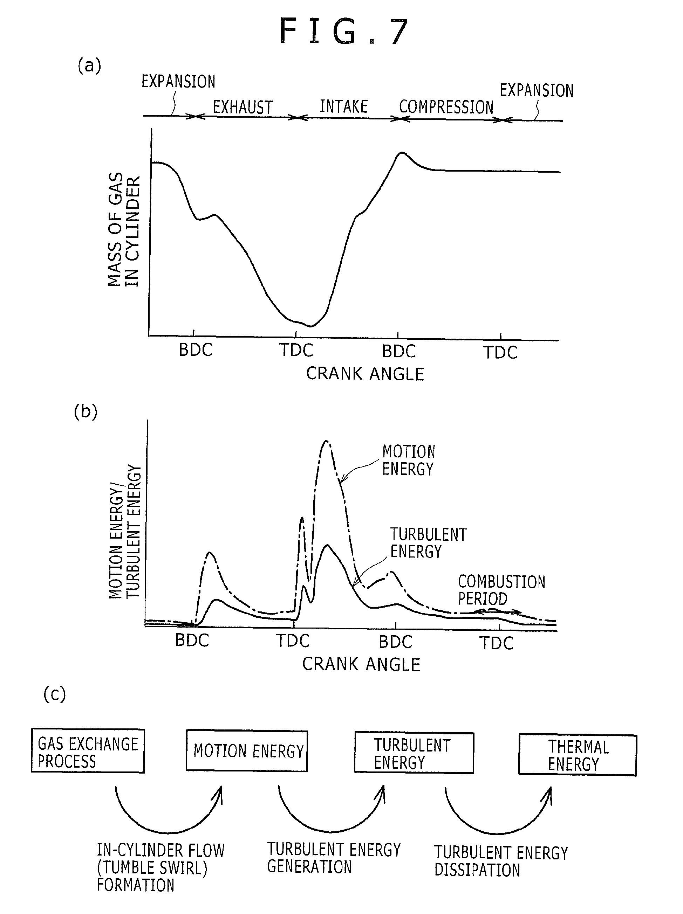

FIG. 7 is a diagram illustrating processes for generating and damping a flow and a turbulence within a cylinder in a gas exchange process which is formed within the cylinder. FIG. 7(a) illustrates a mass transition of the gas within the cylinder in one cycle. FIG. 7 (b) illustrates the transition of a motion energy and a turbulent energy of the gas within the cylinder in one cycle. FIG. 7(c) is a diagram schematically illustrating a mechanism of an influence of the gas exchange on the turbulence within the cylinder.

As can be understood from FIGS. 7(a) to 7(c), the motion energy of the gas within the cylinder is generated mainly during the intake stroke, and a part of the motion energy is converted into the turbulent energy. In a turbulent field, large swirls are collapsed into small swirls, and the turbulent energy having the large swirls is converted into the thermal energy after having passed through a cascade process in which the large swirls are sequentially shifted to the small swirls

For that reason, in the turbulent field of the internal combustion engine, after the turbulent energy has attained at a maximum value in the intake stroke, the turbulent energy is monotonically damped in the compression stroke. In order to facilitate the combustion of the internal combustion engine, there is a need to enhance the turbulence in the vicinity of a compression top dead center which is in the combustion period. Therefore, it is important how the damping operation of the turbulence in the compression stroke is suppressed.

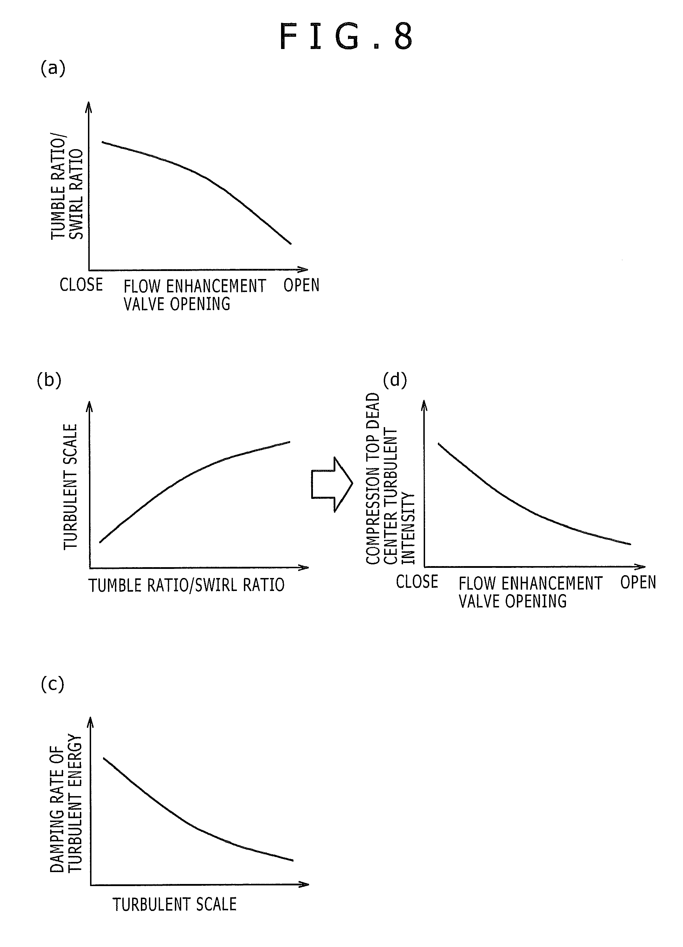

FIG. 8 is a diagram illustrating a mechanism of an influence of the flow enhancement valve on a turbulent enhancement in the vicinity of the compression top dead center.

FIG. 8 (a) illustrates a relationship between the flow enhancement valve and a tumble ratio or a swirl ratio. When the flow enhancement valve is closed, a drift is generated within the cylinder to form a swirl flow or a tumble flow. The swirl ratio and the tumble ratio which are indexes indicative of the intensities of the swirl flow and the tumble flow is increased more as a range of drift becomes larger.

FIG. 8(b) illustrates a relationship between the tumble ratio or the swirl ratio, and a turbulent scale. Because the turbulent energy having the large swirl component is increased more as the tumble ratio or the swirl ratio becomes larger, the scale of the turbulent field within the cylinder is increased.

FIG. 8(c) illustrates a relationship between the turbulent scale and the damping ratio of the turbulent energy. Since the damping ratio of the turbulent energy becomes smaller as the turbulent scale becomes larger, the damping of the turbulent energy in the compression stroke is suppressed.

As a result, as illustrated in FIG. 8(d), when the flow enhancement valve is continuously changed to the closed side, the turbulent intensity at the compression top dead center is continuously increased.

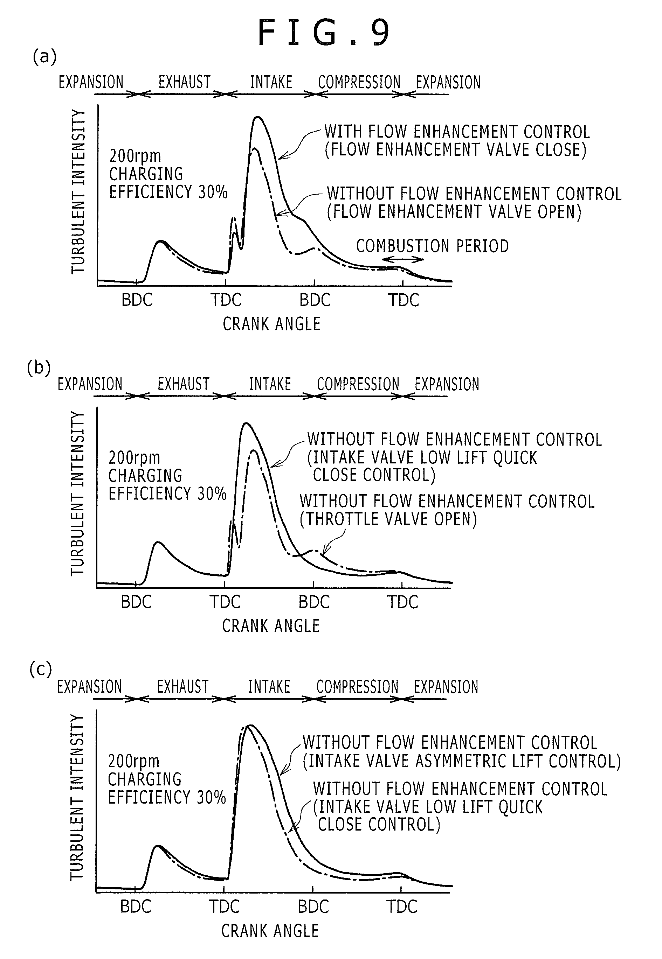

FIG. 9 is a diagram illustrating an influence of states of the flow enhancement valve and the variable valve on the transition of the turbulence within the cylinder.

FIG. 9(a) illustrates results of comparing of the transition of the turbulent intensity between a case in which the flow enhancement valve is closed and a case in which the flow enhancement valve is opened, and it is found that the turbulent intensity in the vicinity of the compression top dead center is larger when the flow enhancement valve is closed.

FIG. 9(b) illustrates results of comparing the transition of the turbulent intensity between a case in which the conditions of the same rotating speed and charging efficiency are realized under a throttle valve control, and a case in which the conditions are realized under an intake valve low-lift quick-close control. It is found that in the intake valve low-lift quick-close control, the damping operation of the turbulence in the compression stroke is larger, and the turbulent intensity at the compression top dead center is smaller than that in the throttle valve control.

FIG. 9(c) illustrates results of comparing the transition of the turbulent intensity between a case in which the conditions of the same rotating speed and charging efficiency are realized under the intake valve low-lift quick-close control, and a case in which the conditions are realized under the intake valve low-lift quick-close control, and a case in which the conditions are realized under an intake valve asymmetric lift control in which only one of two valves is low-lifted. It is found that in the intake valve asymmetric lift control, the damping operation of the turbulence in the compression stroke can be suppressed, and the turbulent intensity at the compression top dead center is larger than that in the intake valve low-lift quick-close control.

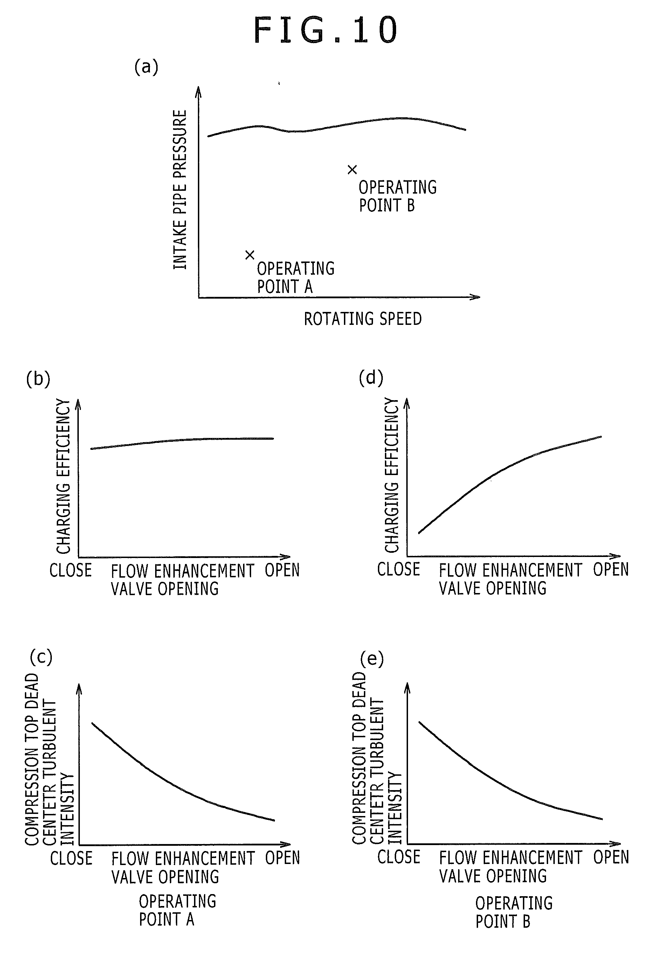

In FIG. 10, FIG. 10 (a) is a diagram illustrating a relationship between operating points A and B different in the rotating speed and an intake pipe pressure. FIGS. 10(b) and 10(c) are diagrams illustrating a state of the operating point A (a relationship between the flow enhancement valve opening and the charging efficiency, and a relationship between the flow enhancement valve and the compression top dead center turbulent intensity). FIGS. 10(d) and 10(e) are diagrams illustrating a state of the operating point B (a relationship between the flow enhancement valve opening and the charging efficiency, and a relationship between the flow enhancement valve and the compression top dead center turbulent intensity).

FIG. 10(b) illustrates a relationship between the flow enhancement valve opening and the charging efficiency under the relatively low flow rate condition, and a large change is not found in the charging efficiency in the open/close state of the flow enhancement valve.

FIG. 10(c) illustrates a relationship between the flow enhancement valve opening and the compression top dead center turbulent intensity under the relatively low flow rate condition, and the compression top dead center turbulent intensity is increased more as the flow enhancement valve is closed more.

FIG. 10(d) illustrates a relationship between the flow enhancement valve opening and the charging efficiency under the relatively large flow rate condition, and the charging efficiency is decreased more as the flow enhancement valve is closed more.

FIG. 10(e) illustrates a relationship between the flow enhancement valve opening and the compression top dead center turbulent intensity under the relatively large flow rate condition, and the compression top dead center turbulent intensity is increased more as the flow enhancement valve is closed more.

As described above, it is found that the interaction of the rotating speed and the intake pipe pressure is influenced on the relationship between the flow enhancement valve opening and the charging efficiency whereas the interaction of the rotating speed and the intake pipe pressure is hardly influenced on the relationship between the flow enhancement valve opening and the compression top dead center turbulent intensity.

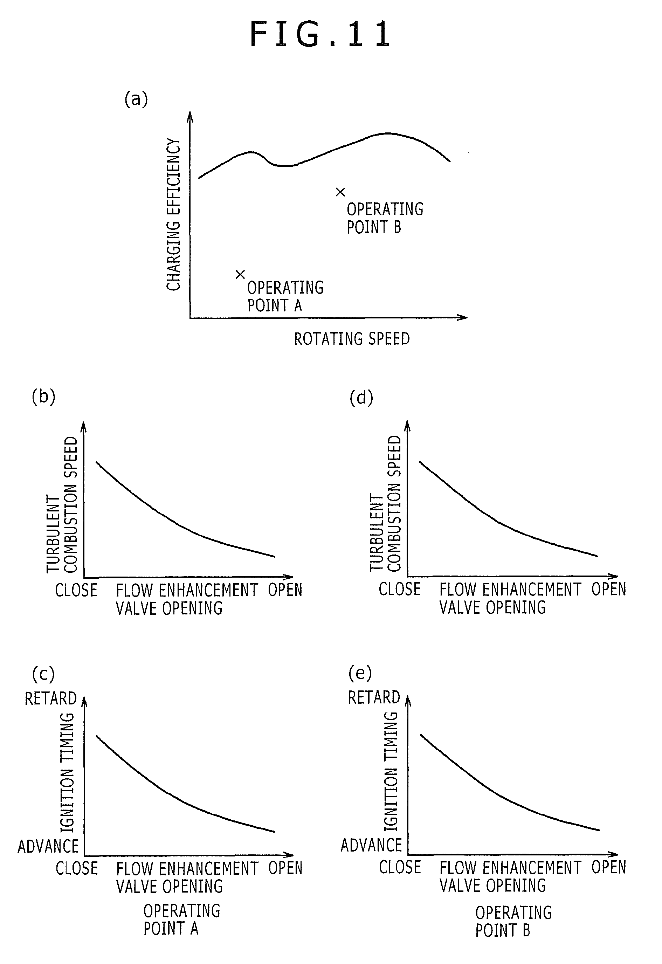

In FIG. 11, FIG. 11(a) is a diagram illustrating a relationship between operating points A and B different in the rotating speed and the charging efficiency. FIGS. 11(b) and 11(c) are diagrams illustrating a state of the operating point A (a relationship between the flow enhancement valve opening and a turbulent combustion speed, and a relationship between the flow enhancement valve opening and the ignition timing). FIGS. 11(d) and 11(e) are diagrams illustrating a state of the operating point B (a relationship between the flow enhancement valve opening and the turbulent combustion speed, and a relationship between the flow enhancement valve opening and the ignition timing).

FIG. 11(b) illustrates a relationship between the flow enhancement valve opening and the turbulent combustion speed under the relatively low flow rate condition, and the turbulent combustion speed is increased more as the flow enhancement valve is closed more. This is because the turbulent combustion speed is substantially in proportion to the turbulent intensity.

FIG. 11(c) illustrates a relationship between the flow enhancement valve opening and the ignition timing under the relatively low flow rate condition, and the ignition timing is retarded more as the flow enhancement valve is closed more. This is because a combustion period is shortened according to an increase in the turbulent combustion speed, and therefore an advance request for the ignition timing for realizing the maximum torque is lessened.

FIG. 11(d) illustrates a relationship between the flow enhancement valve opening and the turbulent combustion speed under the relatively large flow rate condition, and the turbulent combustion speed is increased more as the flow enhancement valve is closed more.

FIG. 11(e) illustrates a relationship between the flow enhancement valve opening and the ignition timing under the relatively large flow rate condition, and the ignition timing is retarded more as the flow enhancement valve is closed more.

As described above, it is understood that the influence of the interaction of the rotating speed and the charging efficiency is hardly found in the influence of the variation of the flow enhancement valve opening on the variation of the ignition timing.

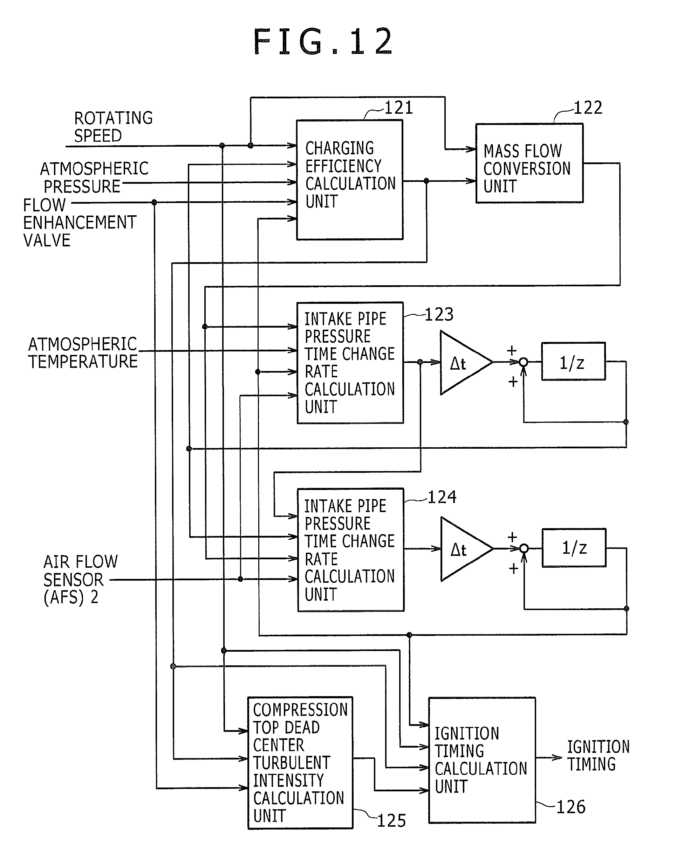

FIG. 12 is a control block diagram of this embodiment, which is a diagram illustrating a control for conducting an ignition timing control when the flow enhancement valve is changed.

Referring to FIG. 12, a charging efficiency calculation unit 121 calculates the charging efficiency (intake air quantity in the cylinder) on the basis of the rotating speed, the intake pipe pressure, the atmospheric pressure, the flow enhancement valve opening, and the intake pipe temperature. A mass flow rate calculation unit 122 calculates (converts) a cylinder portion flow rate on the basis of the calculated charging efficiency and the rotating speed. A intake pipe pressure time change rate calculation unit 123 calculates a time change rate of the intake pipe pressure according to the following Expression (1) on the basis of the calculated cylinder portion flow rate, the atmospheric temperature, the intake pipe temperature, and the air flow sensor detection flow rate.

$$\frac{dp_m}{dt} = \frac{\kappa R}{V_{in}}\left( T_{atm}\frac{dG_{afs}}{dt} - T_{in}\frac{dG_{cyl}}{dt} \right) \qquad \ldots \text{Ex. (1)}$$

where $\kappa$ and $R$ are a specific heat ratio and a gas constant, respectively.

If a working fluid is regarded as air, those values can be given by respective fixed values of 1.4 and 287.03. The intake pipe pressure can be calculated by time integration of Expression (1).

In the control system according to this embodiment, the intake pipe pressure and the time change rate are calculated with the use of Expression (1). However, it is needless to say that the present invention is not limited to this configuration. That is, the same advantages can be obtained in a configuration in which the intake pipe pressure is directly detected by a pressure sensor.

Also, in Expression (1), an influence of a heat transfer to an intake pipe wall surface is ignored from the viewpoint of a reduction in the calculation load. However, a prediction precision can be improved by taking the heat transfer into account.

An intake pipe temperature time change rate calculation unit 124 in FIG. 12 calculates a time change rate of an intake temperature according to the following Expression (2) on the basis of the intake pipe pressure, the time change rate of the intake pipe pressure, the cylinder portion flow rate, and the air flow sensor detection flow rate. Further, the intake pipe temperature time change rate calculation unit 124 calculates a transition behavior of the intake temperature by time integration of the time change rate of the intake temperature.

$$\frac{dT_{in}}{dt} = \frac{T_{in}}{p_{in}} \left\{ \frac{dp_{in}}{dt} - \frac{RT_{in}}{V_{in}} \left( \frac{dG_{afs}}{dt} - \frac{dG_{cyl}}{dt} \right) \right\} \qquad \texttt{... Ex. (2)}$$

A compression top dead center turbulent intensity calculation unit 125 calculates a compression top dead center turbulent intensity on the basis of the rotating speed, the charging efficiency, and the flow enhancement valve opening.

An ignition timing calculation unit 126 calculates the ignition timing on the basis of the rotating speed, the charging efficiency, the intake pipe temperature, and the compression top dead center turbulent intensity.

With the configuration illustrated in FIG. 12, the ignition timing can be suitably controlled even when the opening of the flow enhancement valve is rapidly changed, and the occurrence of the knock or the exhaust of nitrogen oxide, which is caused by an excessive ignition advance, and a torque reduction, which is caused by an excessive ignition retard, can be suppressed.

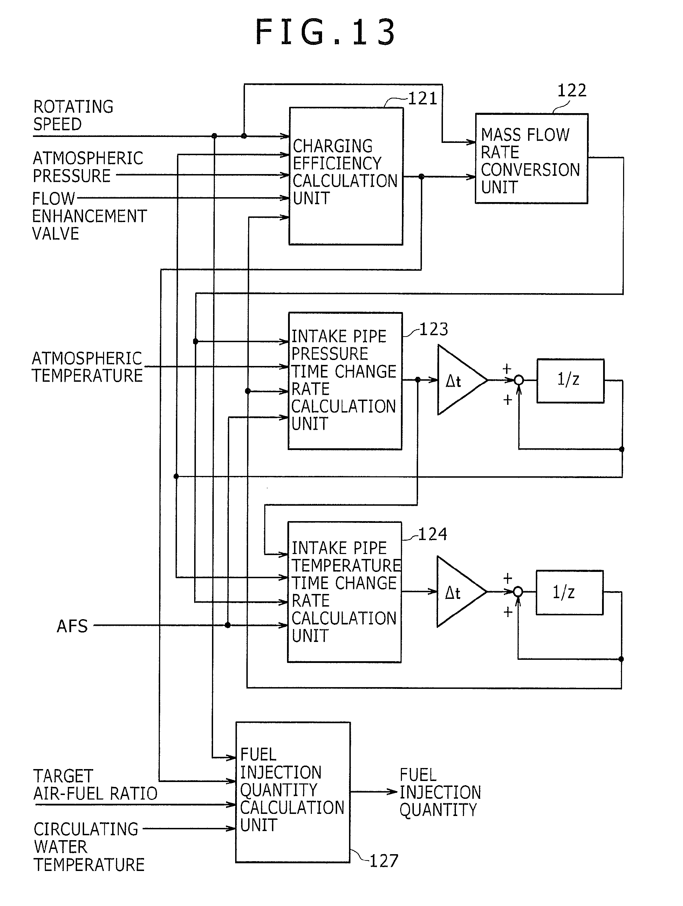

FIG. 13 is a control block diagram according to another embodiment of the present invention, which is a diagram illustrating a control for conducting a fuel injection quantity control when the flow enhancement valve is changed according to another embodiment of the present invention. A difference from FIG. 12 resides in that the compression top dead center turbulent intensity calculation unit 125 and the ignition timing calculation unit 126 are replaced with a fuel injection quantity calculation unit 127. Therefore, only portions different from FIG. 12 will be described.

The fuel injection quantity calculation unit 127 in FIG. 13 calculates the fuel injection quantity on the basis of the rotating speed, the charging efficiency, the circulating water temperature, and the target air-fuel ratio.

With the configuration illustrated in FIG. 13, the fuel injection quantity can be suitably controlled even when the flow enhancement valve opening is rapidly changed, and the exhaust of particulate material such as carbon monoxide, unburned hydrocarbon, and soot, which are caused by the rich air-fuel ratio, the torque reduction or accident fire caused by the lean air-fuel ratio, and the exhaust of nitrogen oxide, which are caused by the lean air-fuel ratio, can be suppressed.

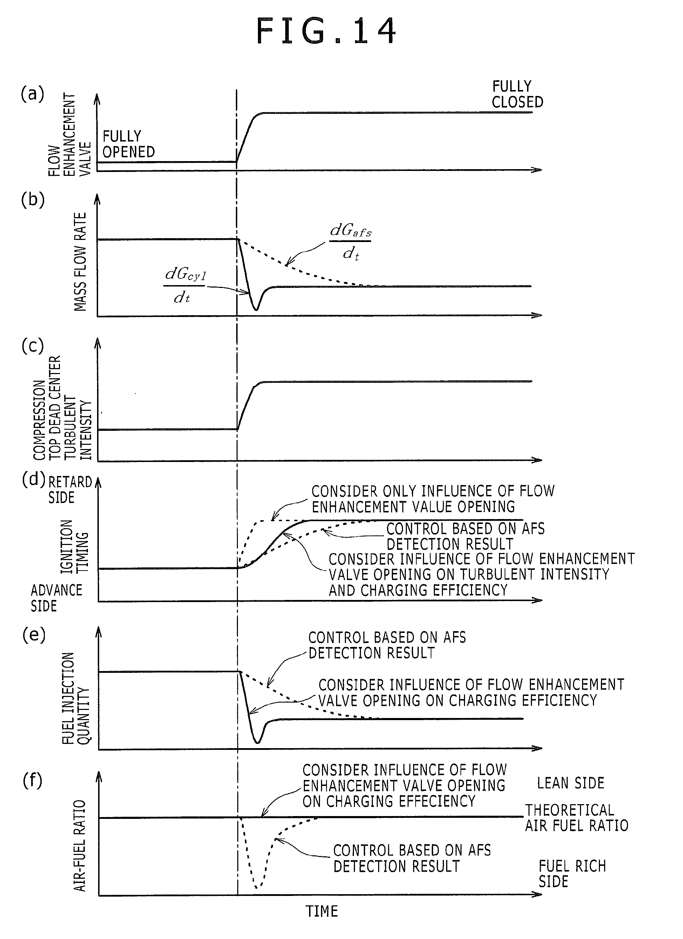

FIG. 14 is a diagram illustrating the transitions of the mass flow rate, the compression top dead center turbulent intensity, the ignition timing, the fuel injection quantity, and the air-fuel ratio with time, immediately after the flow enhancement valve is precipitously closed, under a control with reference to the control block diagrams illustrated in FIGS. 12 and 13.

As illustrated in FIGS. 14 (a) and 14(b), according to a comparison of the transition of the mass flow rate with time in the cylinder portion and the air flow sensor portion, it can be understood that the mass flow rate of the cylinder portion is precipitously decreased once immediately after the flow enhancement valve is precipitously closed, and is converged in the steady state after having been overshot. It can be understood that the mass flow rate of the air flow sensor portion is gradually decreased with a delay with respect to a change in the flow enhancement valve opening, and eventually converged to the mass flow rate of the cylinder portion into the steady state.

As illustrated in FIG. 14(c), the compression top dead center turbulent intensity increases following a change in the flow enhancement valve opening.

In FIG. 14(d), the ignition timing calculated in the control block diagram illustrated in FIG. 12 follows a course indicated by a solid line on the basis of the transition of the mass flow rate and the compression top dead center turbulent intensity of the cylinder portion with time as described above. That is, when the ignition timing is controlled with reference to only the flow enhancement valve opening, the ignition timing is set at the retard side as compared with the ignition timing controlled and calculated in the control block diagram illustrated in FIG. 12, resulting in the torque reduction.

Also, when the ignition timing is controlled on the basis of the flow rate of the air flow sensor portion, the ignition timing is set at the advance side as compared with the ignition timing calculated in the control block diagram illustrated in FIG. 12, resulting in the occurrence of knock, or the exhaust of nitrogen oxide.

Also, the fuel injection quantity calculated and controlled in the control block diagram illustrated in FIG. 13 follows a course indicated by a solid line in FIG. 14(d) on the basis of the above-mentioned transition of the mass flow rate of the cylinder portion with time. That is, when the fuel injection quantity is controlled on the basis of the flow rate of the air flow sensor portion, the fuel injection quantity is set at an increase side as compared with the fuel injection quantity calculated and controlled in the control block diagram illustrated in FIG. 13. This causes the exhaust of particulate material such as carbon monoxide, unburned hydrocarbon, and soot, caused by the rich air-fuel ratio.

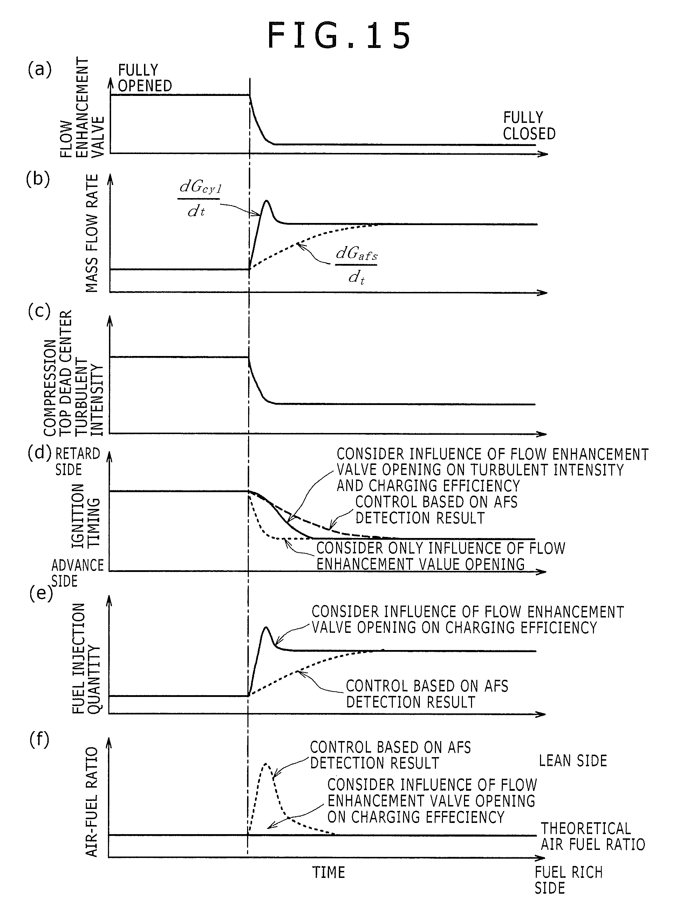

FIG. 15 is a diagram illustrating the transitions of the mass flow rate, the compression top dead center turbulent intensity, the ignition timing, the fuel injection quantity, and the air fuel ratio with time, immediately after the flow enhancement valve is precipitously closed, under the control illustrated in the control block diagrams in FIGS. 12 and 13.

As illustrated in FIGS. 15 (a) and 15(b), according to a comparison of the transition of the mass flow rate with time in the cylinder portion and the air flow sensor portion, it can be understood that the mass flow rate of the cylinder portion is precipitously increased once immediately after the flow enhancement valve is precipitously opened, and is converged in the steady state after having been overshot. It can be understood that the mass flow rate of the air flow sensor portion is gradually increased with a delay with respect to a change in the flow enhancement valve opening, and eventually converged to the mass flow rate of the cylinder portion into the steady state.

As illustrated in FIG. 15(c), the compression top dead center turbulent intensity decreases following a change in the flow enhancement valve opening.

As illustrated FIG. 15(d), the ignition timing calculated in the control block diagram illustrated in FIG. 12 follows a course indicated by a solid line on the basis of the transition of the mass flow rate and the compression top dead center turbulent intensity of the cylinder portion with time. That is, when the ignition timing is controlled with reference to only the flow enhancement valve opening, the ignition timing is set at the advance side as compared with the ignition timing calculated in the control block illustrated in FIG. 12, thereby causing the occurrence of knock and the exhaust of nitrogen oxide.

Also, when the ignition timing is controlled on the basis of the flow rate of the air flow sensor portion, the ignition timing is set at the retard side as compared with the ignition timing calculated in the control block illustrated in FIG. 12, thereby causing the torque reduction.

Also, the fuel injection quantity calculated in the control block illustrated in FIG. 13 follows a course indicated by a solid line on the basis of the above-mentioned transition of the mass flow rate of the cylinder portion with time.

When the fuel injection quantity is controlled on the basis of the flow rate of the air flow sensor portion, the fuel injection quantity is set at a decrease side as compared with the fuel injection quantity calculated in the control block illustrated in FIG. 13. This causes the torque reduction or accident fire caused by the lean air-fuel ratio, and the exhaust of nitrogen oxide.

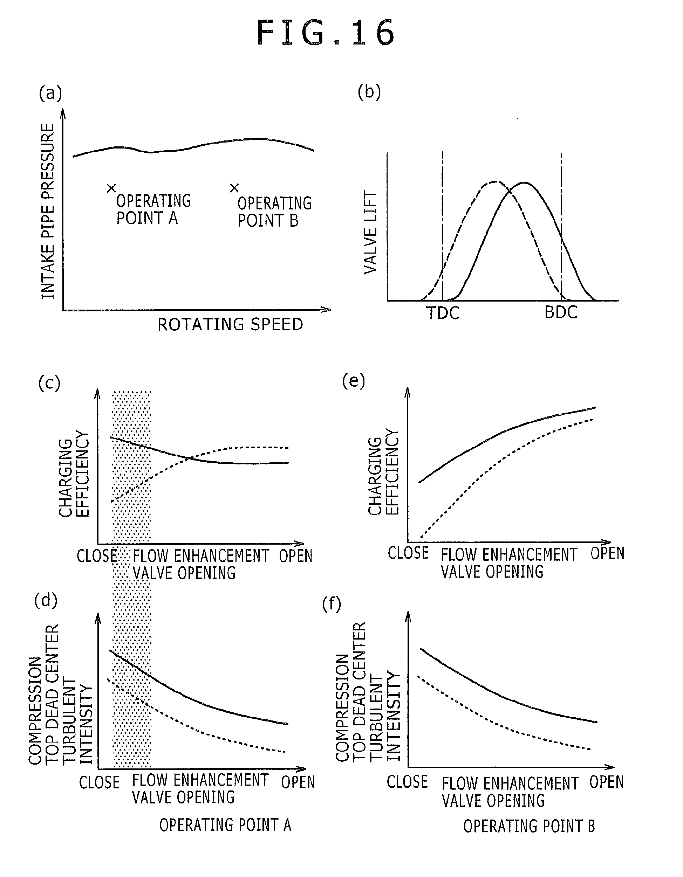

In FIG. 16, FIG. 16(a) is a diagram illustrating a relationship between operating points A and B different in the rotating speed and the intake pipe pressure. FIGS. 16 (b) is a diagram illustrating a case (broken line) in which the phase of the intake valve is set at the advance side, and a case (solid line) in which the phase of the intake valve is set at the retard side. FIGS. 16(c) and 16(d) are diagrams illustrating a state of the operating point A (a relationship between the flow enhancement valve opening and the charging efficiency, and a relationship between the flow enhancement valve opening and the compression top dead center turbulent intensity). FIGS. 16(d) and 16(e) are diagrams illustrating a state of the operating point B (a relationship between the flow enhancement valve opening and the charging efficiency, and a relationship between the flow enhancement valve opening and the compression top dead center turbulent intensity).

FIG. 16(c) illustrates a relationship between the flow enhancement valve opening and the charging efficiency at the operating point A. When the phase of the intake valve is set at the advance side, the charging efficiency is decreased more as the flow enhancement valve is closed more. On the other hand, when the phase of the intake valve is set at the retard side, the charging efficiency is increased more as the flow enhancement valve is closed more.

FIG. 16(d) illustrates a relationship between the flow enhancement valve opening and the compression top dead center turbulent intensity at the operating point A. The compression top dead center turbulent intensity is increased more as the flow enhancement valve is closed more regardless of the phase of the intake valve.

FIG. 16(e) illustrates a relationship between the flow enhancement valve opening and the charging efficiency at the operating point B. When the phase of the intake valve is set at the advance side, the charging efficiency is decreased more as the flow enhancement valve is closed more. When the phase of the intake valve is also set at the retard side, the charging efficiency is decreased more as the flow enhancement valve is closed more. However, the degree of decrease is relatively small.

FIG. 16(f) illustrates a relationship between the flow enhancement valve opening and the compression top dead center turbulent intensity at the operating point B. Although there is a quantitative difference depending on the state of the variable valve, a large difference is not found in the tendency of a change in the compression top dead center turbulent intensity to the flow enhancement valve opening.

As described above, the interaction of the operating point and the state of the variable valve is influenced on the relationship between the flow enhancement valve opening and the charging efficiency, and the relationship between the flow enhancement valve opening and the compression top dead center turbulent intensity. For that reason, there is a need to conduct the ignition timing control and the fuel injection quantity control taking the above interaction into account.

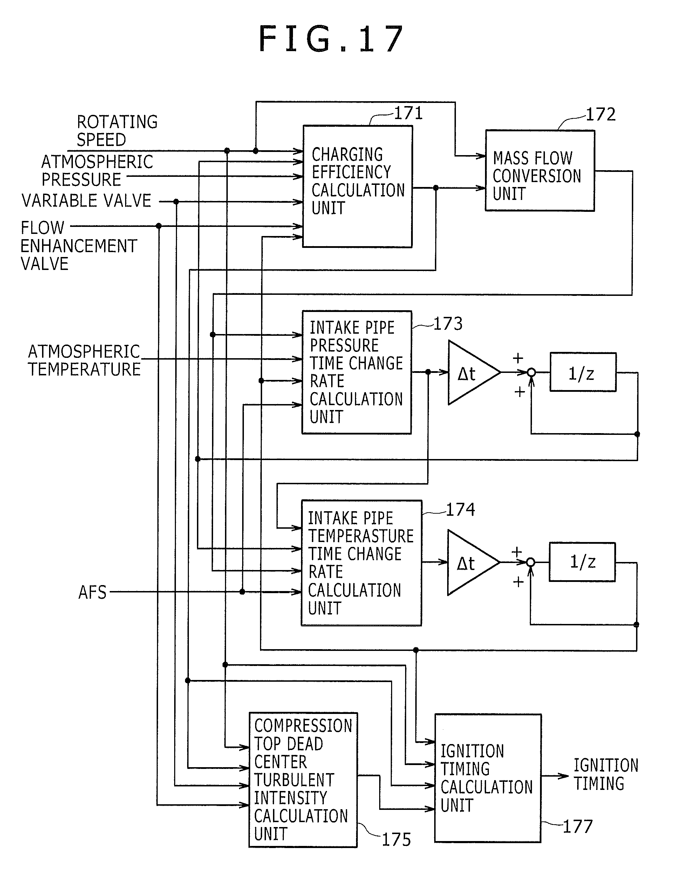

FIG. 17 is a control block diagram of still another embodiment of the present invention, which is a control block diagram for conducting an ignition timing control when the flow enhancement valve is changed, taking into account an influence of the interaction of the operating point and the variable valve on the relationship of the flow enhancement valve opening and the charging efficiency, and the relationship of the flow enhancement valve opening and the compression top dead center turbulent intensity.

Referring to FIG. 17, a charging efficiency calculation unit 171 calculates the charging efficiency on the basis of the rotating speed, the intake pipe pressure, the atmospheric pressure, the flow enhancement valve opening, the intake pipe temperature, and the variable valve position. A mass flow rate conversion unit 172 converts a cylinder portion flow rate on the basis of the charging efficiency and the rotating speed. A intake pipe pressure time change rate calculation unit 173 calculates a time change rate of the intake pipe pressure on the basis of the cylinder portion flow rate, the atmospheric temperature, the intake pipe temperature, and the air flow sensor detection flow rate. Then, the intake pipe pressure time change rate calculation unit 173 can integrate the time change rate of the intake pipe pressure with time to calculate the intake pipe pressure.

In the control system according to this embodiment, the intake pipe pressure and the time change rate are calculated. However, the present invention is not limited to this configuration, but the same advantages can be obtained in a configuration in which the intake pipe pressure is directly detected by a pressure sensor.

Also, the intake pipe pressure time change rate calculation unit 173 ignores the influence of the heat transfer to the intake pipe wall surface from the viewpoint of a reduction in the calculation load. However, a prediction precision can be improved by taking the heat transfer into account.

An intake pipe temperature time change rate calculation unit 174 calculates the time change rate of the intake temperature on the basis of the intake pipe pressure, the time change rate of the intake pipe pressure, the cylinder portion flow rate, and the air flow sensor detection flow rate. Further, the intake pipe temperature time change rate calculation unit 174 calculates a transition behavior of the intake temperature by time integration of the time change rate of the intake temperature.

A compression top dead center turbulent intensity calculation unit 175 calculates the compression top dead center turbulent intensity on the basis of the rotating speed, the charging efficiency, the flow enhancement valve opening, and the variable valve position.

An ignition timing calculation unit 176 calculates the ignition timing of the internal combustion engine on the basis of the rotating speed, the charging efficiency, the intake pipe temperature, and the compression top dead center turbulent intensity.

With the above-mentioned configuration, the ignition timing can be suitably controlled even when the flow enhancement valve opening is rapidly changed taking the influence of the interaction of the operating point and the variable valve into account, and the occurrence of the knock or the exhaust of nitrogen oxide caused by the excessive ignition advance, and the torque reduction caused by the excessive ignition retard can be suppressed.

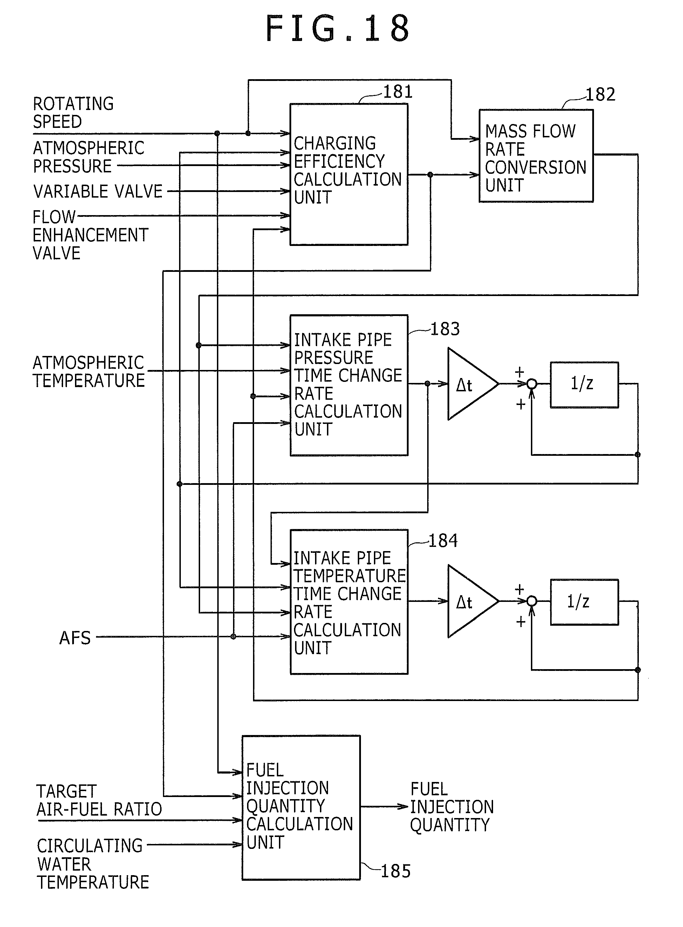

FIG. 18 is a control block diagram of still another embodiment of the present invention, which is a control block diagram for conducting a fuel injection quantity control when the flow enhancement valve is changed, taking into account an influence of the interaction of the operating point and the variable valve on the relationship of the flow enhancement valve opening and the charging efficiency, and the relationship of the flow enhancement valve opening and the compression top dead center turbulent intensity.

A charging efficiency calculation unit 181, a mass flow rate conversion unit 182, an intake pipe pressure time change rate calculation unit 183, and an intake pipe temperature time change rate calculation unit 184 in FIG. 18 are identical in the control function with the charging efficiency calculation unit 171, the mass flow rate conversion unit 172, the intake pipe pressure time change rate calculation unit 173, and the intake pipe temperature time change rate calculation unit 174 in FIG. 17. Therefore, their description will be omitted.

A fuel injection quantity calculation unit 185 calculates the fuel injection quantity on the basis of the rotating speed, the charging efficiency, the circulating water temperature, and the target air-fuel ratio.

With the configuration, the fuel injection quantity can be suitably controlled even when the flow enhancement valve opening is rapidly changed taking the influence of the interaction of the operating point and the variable valve into account. Therefore, the exhaust of particulate material such as carbon monoxide, unburned hydrocarbon, and soot, which are caused by the rich air-fuel ratio, the torque reduction or accident fire caused by the lean air-fuel ratio, and the exhaust of nitrogen oxide, which are caused by the lean air-fuel ratio, can be suppressed.

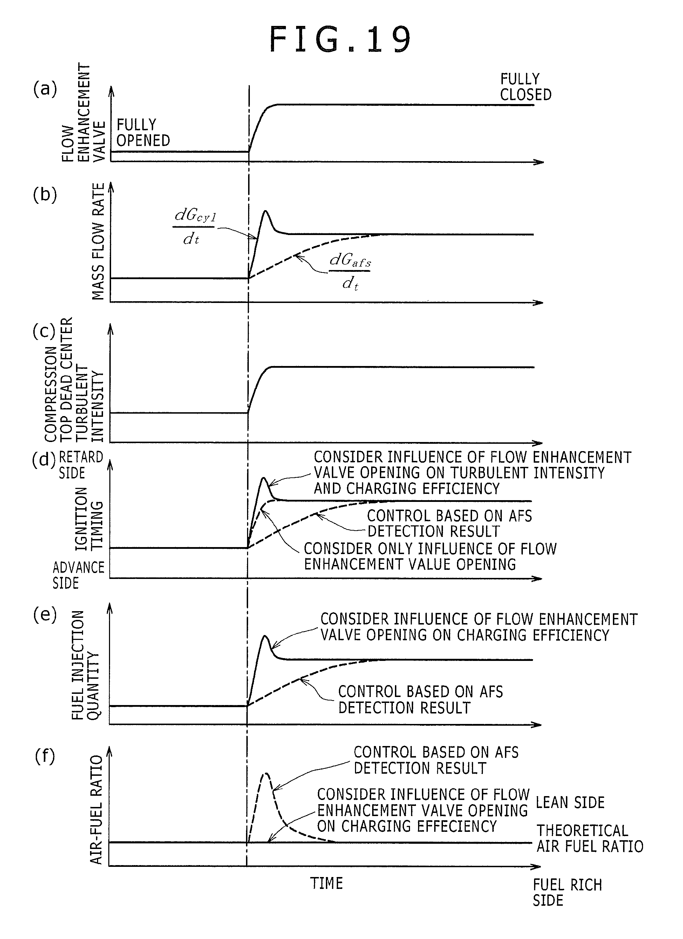

FIG. 19 is a diagram illustrating the respective transitions of (a) a precipitous closed operation of the flow enhancement valve, (b) the mass flow rate, (c) the compression top dead center turbulent intensity, (d) the ignition timing, (e) the fuel injection quantity, and (f) the air fuel ratio immediately after the flow enhancement valve is precipitously closed, with time, when the low rotating speed and the intake variable valve are set on the retard side (corresponding to a hatched portion in FIGS. 16(c) and 16(d)), with reference to the control block diagrams illustrated in FIGS. 17 and 18.

As illustrated in FIG. 19(b), according to a comparison of the transition of the mass flow rate with time in the cylinder portion and the air flow sensor portion, the mass flow rate of the cylinder portion is precipitously increased once immediately after the flow enhancement valve is precipitously closed, and is converged in the steady state after having been overshot. The mass flow rate of the air flow sensor portion is gradually increased with a delay with respect to a change in the flow enhancement valve opening, and eventually converged to the mass flow rate of the cylinder portion into the steady state.

As illustrated in FIG. 19(c), the compression top dead center turbulent intensity increases following a change in the flow enhancement valve opening. As illustrated FIG. 19(d), the ignition timing calculated in the control block in FIG. 17 follows a course indicated by a solid line on the basis of the transition of the mass flow rate and the compression top dead center turbulent intensity of the cylinder portion with time. On the contrary, when the ignition timing is controlled with reference to only the flow enhancement valve opening, the ignition timing is set at the advance side as compared with the ignition timing calculated in the control block illustrated in FIG. 17, thereby causing the occurrence of knock and the exhaust of nitrogen oxide.

Also, when the ignition timing is controlled on the basis of the flow rate of the air flow sensor portion, the ignition timing is set at a further advance side as compared with the ignition timing calculated in the control block illustrated in FIG. 17, thereby remarkably causing the occurrence of knock and the exhaust of nitrogen oxide.

Also, as described above, the fuel injection quantity calculated by the control block illustrated in FIG. 18 follows a course indicated by a solid line on the basis of the transition of the mass flow rate of the cylinder portion with time. On the contrary, when the fuel injection quantity is controlled on the basis of the flow rate of the air flow sensor portion, the fuel injection quantity is set at a decrease side as compared with the fuel injection quantity calculated in the control block illustrated in FIG. 18, thereby causing the torque reduction, accident fire, and the exhaust of nitrogen oxide, which are caused by the lean air-fuel ratio.

As described above, the behavior immediately after the flow enhancement valve is precipitously closed is different from the behavior illustrated in FIG. 14. This is caused by the influence of the interaction of the operating point and the variable valve on the relationship between the flow enhancement valve opening and the charging efficiency, and the relationship between the flow enhancement valve opening and the compression top dead center turbulent intensity.

In the control block diagrams illustrated in FIGS. 17 and 18, the ignition timing and the fuel injection quantity can be suitably controlled taking the influence of the interaction into consideration. For that reason, the fuel consumption, the power, and the exhaust performance of the internal combustion engine can be prevented from being deteriorated.

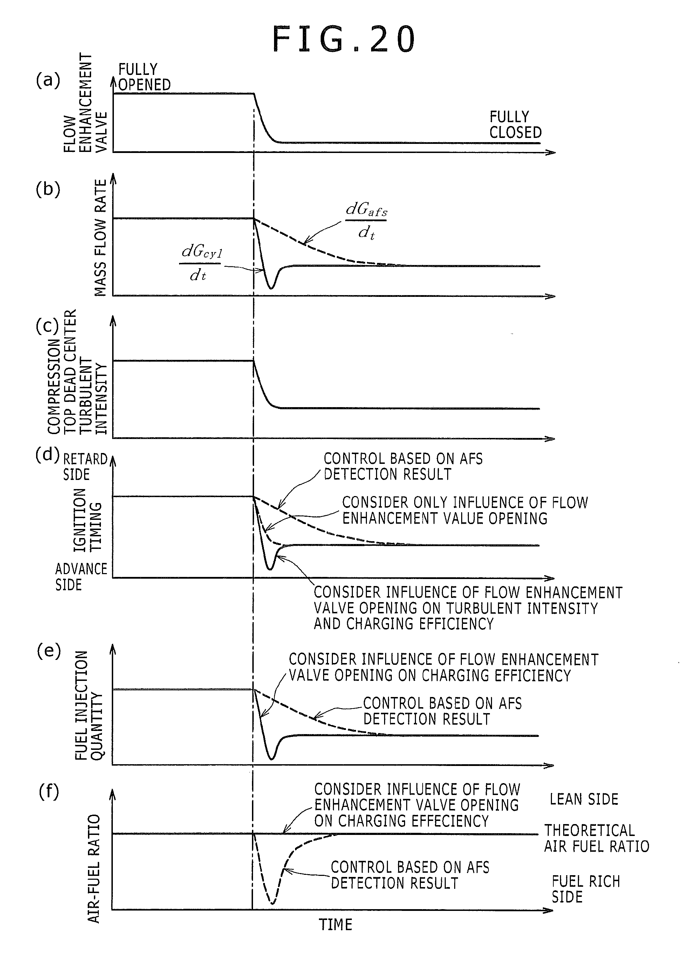

FIG. 20 is a diagram illustrating the transitions of the mass flow rate, the compression top dead center turbulent intensity, the ignition timing, the fuel injection quantity, and the air fuel ratio with time, immediately after the flow enhancement valve is precipitously closed, when the low rotating speed and the intake variable valve are set on the retard side (corresponding to the hatched portion in FIGS. 16 (c) and 16(d)), with reference to the control block diagrams illustrated in FIGS. 17 and 18.

As illustrated in FIGS. 20 (a) and 20(b), according to a comparison of the transition of the mass flow rate with time in the cylinder portion and the air flow sensor portion, the mass flow rate of the cylinder portion is precipitously decreased once immediately after the flow enhancement valve is precipitously opened, and is converged in the steady state after having been overshot. It can be understood that the mass flow rate of the air flow sensor portion is gradually decreased with a delay with respect to a change in the flow enhancement valve opening, and eventually converged to the mass flow rate of the cylinder portion into the steady state.

As illustrated in FIG. 20(c), the compression top dead center turbulent intensity decreases following a change in the flow enhancement valve opening.

As illustrated FIG. 20(d), the ignition timing calculated in the control block diagram illustrated in FIG. 17 follows a course indicated by a solid line on the basis of the transition of the mass flow rate and the compression top dead center turbulent intensity of the cylinder portion with time. That is, when the ignition timing is controlled with reference to only the flow enhancement valve opening, the ignition timing is set at the retard side as compared with the ignition timing calculated in the control block illustrated in FIG. 17, thereby causing the torque reduction.

Also, when the ignition timing is controlled on the basis of the flow rate of the air flow sensor portion, the ignition timing is set further at the retard side as compared with the ignition timing calculated in the control block diagram illustrated in illustrated FIG. 17, thereby remarkably causing the torque reduction.

As illustrated FIG. 20(e), the fuel injection quantity calculated in the control block diagram illustrated in FIG. 18 follows a course indicated by a solid line on the basis of the above-mentioned transition of the mass flow rate of the cylinder portion with time. That is, when the fuel injection quantity is controlled on the basis of the flow rate of the air flow sensor portion, the fuel injection quantity is set at the increase side as compared with the fuel injection quantity calculated in the control block illustrated in FIG. 18, thereby causing the exhaust of particulate material such as carbon monoxide, unburned hydrocarbon, and soot, which are caused by the rich air-fuel ratio.

The behavior immediately after the flow enhancement valve is precipitously closed as described above is different from the behavior illustrated in FIG. 15. This is caused by the influence of the interaction of the operating point and the variable valve on the relationship between the flow enhancement valve opening and the charging efficiency, and the relationship between the flow enhancement valve opening and the compression top dead center turbulent intensity. In the control blocks illustrated in FIGS. 17 and 18, the ignition timing and the fuel injection quantity can be suitably controlled taking the influence of the interaction into consideration. For that reason, the fuel consumption, the power, and the exhaust performance of the internal combustion engine can be prevented from being deteriorated.

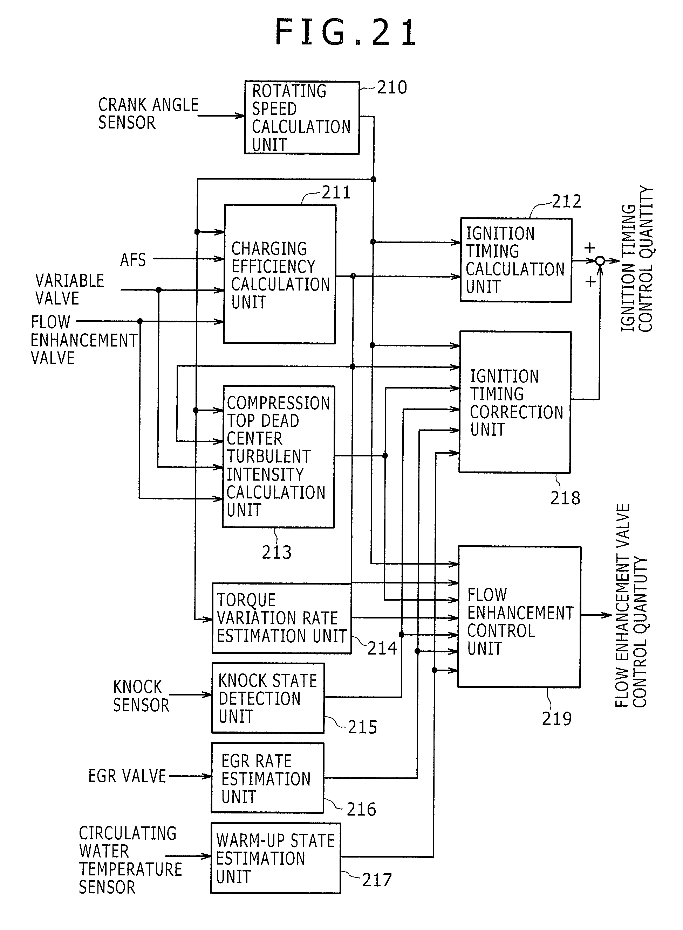

FIG. 21 is a control block diagram of still another embodiment of the present invention, which is a diagram illustrating a control block for conducting a cooperation control of the flow enhancement valve opening and the ignition timing.

A rotating speed calculation unit 210 calculates a rotating speed of the internal combustion engine on the basis of a cycle of a pulse signal from a crank angle sensor.

A charging efficiency calculation unit 211 calculates the charging efficiency on the basis of the rotating speed, an air flow sensor detection value, a state quantity of the variable valve, and the flow enhancement valve opening. An ignition timing calculation unit 212 calculates the ignition timing on the basis of the rotating speed and the charging efficiency.

A compression top dead center turbulent intensity calculation unit 213 calculates the compression top dead center turbulent intensity on the basis of the rotating speed, the charging efficiency, the variable valve state quantity, and the flow enhancement valve opening.

In this embodiment, the turbulent intensity at the compression top dead center is calculated. However, the present invention is not limited to this configuration, and the same advantages can be obtained in a configuration in which an index indicative of a flow state such as the tumble ratio, the swirl ratio, or Reynolds number is calculated, and the ignition timing is corrected on the basis of this calculation result.

A torque variation rate estimation unit 214 estimates a torque from the time change rate of rotating speed, and also estimates a torque variation rate on the basis of the time change rate. In this embodiment, the torque variation rate is estimated, but the present invention is not limited to this configuration, but may be applied to a configuration in which the time change rate of the rotating speed or a cycle fluctuation of the combustion is estimated, and the estimated value is used for the input of the control unit of the flow enhancement valve.

A knock state detecting unit 215 detects whether a knock occurs, or not, on the basis of an output of the knock sensor. An EGR rate estimation unit 216 estimates an EGR rate on the basis of the opening of the EGR valve. A warm-up state estimation unit 217 estimates a warm-up state of the internal combustion engine on the basis of a detection value of the circulating water temperature sensor.

In the control system according to this embodiment, the warm-up state is estimated on the basis of the circulating water temperature. The present invention is not limited to this configuration, but the warm-up state may be estimated on the basis of a lubrication oil temperature or an elapsed time after initialization, or an estimated value or a measured value of an exhaust gas purification catalyst temperature may be used.

An ignition timing correction unit 218 calculates an ignition timing correction quantity on the basis of the rotating speed and the charging efficiency, which are calculated by the rotating speed calculation unit 210 and the charging efficiency calculation unit 211, respectively, and the compression top dead center turbulent intensity, the torque variation rate, knock presence/absence, the EGR rate, and the warm-up state, which are calculated by the compression top dead center turbulent intensity calculation unit 213, the knock state detecting unit 215, the EGR rate estimation unit 216, and the warm-up state estimation unit 217, respectively.

In this embodiment, at the same rotating speed and charging efficiency point, the ignition timing is corrected to the more retard side as the compression top dead center turbulent intensity is increased more. Also, if it is determined that the knock is present by the knock sensor, the ignition timing is corrected to the retard side for avoiding the knock. At the same rotating speed and charging efficiency point, the ignition timing is corrected to the more advance side as the EGR rate is increased more.

When it is determined that the state is a cold state as a result of estimating the warm-up state, the retard correction of the ignition timing is conducted so that the exhaust gas purification catalyst is early set to an activation temperature. The delay quantity of the ignition timing is set to be larger as a difference between the present exhaust gas purification catalyst temperature and the catalyst activation temperature is larger, as a result of which catalyst can be early activated.

A flow enhancement valve control unit 219 calculates a controlled variable of the flow enhancement valve on the basis of the calculated rotating speed and charging efficiency, the calculated compression top dead center turbulent intensity, the torque variation rate, the knock presence/absence, the EGR rate, and the warm-up state.

The compression top dead center turbulent intensity is decreased more as the maximum lift quantity of the variable valve is decreased more, or as the valve close timing is advanced more. For that reason, the combustion speed is decreased, and the cycle fluctuation of the combustion is increased. In order to prevent this, the flow enhancement valve opening is controlled so that the flow is more enhanced. As a result, the valve close timing can be controlled to be set at the more advance side.

Also, when it is determined that the knock is present by the knock sensor, the flow enhancement valve opening is controlled so that the flow is more enhanced for avoiding the knock. With the above configuration, a full open power can be improved.

At the same rotating speed and charging efficiency point, as the EGR rate is increased more, the combustion speed is decreased more, and the cycle fluctuation of the combustion is increased more. For that reason, in order to prevent this, the flow enhancement valve opening is controlled so that the flow is more enhanced. As a result, since a larger amount of EGR can flow back, the fuel consumption at the time of the low load operation can be conducted.

When it is determined that the state is the cold state as a result of estimating the warm-up state, the retard correction of the ignition timing is conducted. However, the ignition timing is retarded to increase the cycle fluctuation of the combustion. For that reason, the flow enhancement valve opening is controlled so that the flow is more enhanced for the purpose of stabilizing the combustion. As a result, since a range of the retard of the ignition timing can be increased, and a high-temperature gas can be exhausted, the exhaust catalyst can be early activated.

The exhaust purification catalyst immediately after the internal combustion engine starts is early activated with the result that the exhaust of unburned hydrocarbon can be remarkably suppressed.

Hereinafter, a description will be given of the actions or advantages of the several embodiments of the present invention.

According to an embodiment of the present invention, with the provision of the variable valve mechanism in the intake valve, the intake air quantity flowing into the cylinder and the index of the turbulent intensity are calculated further taking the operating state of the variable valve mechanism into account, and the ignition timing is calculated on the basis of the rotating speed, the intake air quantity flowing into the cylinder, and the turbulent intensity index. As a result, the intake variable valve mechanism is set to a variety of operating states, and even when the opening of the flow enhancement valve is transiently changed, the ignition timing can be suitably controlled taking the intake air quantity flowing into the cylinder and the transient behavior of the turbulent intensity index within the cylinder into account. For that reason, the fuel consumption, the power, and the exhaust performance of the internal combustion engine when the opening of the flow enhancement valve is transiently changed can be prevented from being deteriorated.

According to another embodiment of the present invention, the variable valve mechanism has the variable maximum lift and the variable phase, and the opening of the flow enhancement valve is controlled to enhance the flow according to the decrease in the maximum lift or the advance of the valve close timing. Also, the turbulent intensity index within the cylinder is calculated on the basis of the rotating speed, the intake air quantity flowing into the cylinder, the operating state of the flow enhancement valve, and the operating state of the intake variable valve mechanism, and the ignition timing is corrected on the basis of the rotating speed, the intake air quantity flowing into the cylinder, and the turbulence intensity index within the cylinder. With this configuration, the decreased turbulence within the cylinder can be enhanced in flow by control of the flow enhancement valve according to the decreased maximum lift or the advanced valve close timing. As a result, destabilized combustion state can be stabilized.

According to still another embodiment of the present invention, the warm-up state of the internal combustion engine is estimated on the basis of the circulating water temperature, the opening of the flow enhancement valve is controlled to enhance the flow on the basis of the warm-up state of the internal combustion engine in a cold state where the warm-up state of the internal combustion engine is equal to or lower than the given value, and the ignition speed is corrected to be retarded on the basis of the warm-up state, the rotating speed, the intake air quantity flowing into the cylinder, and the turbulent intensity index within the cylinder. As a result, the cold state of the internal combustion engine can be more promptly changed to the warm-up state, and the exhaust performance of the internal combustion engine can be improved according to the early activation of the exhaust purification catalyst.

According to yet still another embodiment of the present invention, whether the knock is present, or not, is detected on the basis of the knock sensor, the opening of the flow enhancement valve is controlled to enhance the flow when the knock is detected, and the ignition speed is corrected on the basis of the detection result of the knock sensor, the rotating speed, the intake air quantity flowing into the cylinder, and the turbulent intensity index within the cylinder. As a result, the power performance of the internal combustion can be improved.

According to yet still another embodiment of the present invention, the EGR rate is estimated on the basis of the EGR valve opening, the opening of the flow enhancement valve is controlled to enhance the flow according to the increase in the EGR rate with the use of the EGR valve, and the ignition timing is corrected on the basis of the EGR rate, the rotating speed, the intake air quantity flowing into the cylinder, and the turbulent intensity index within the cylinder. As a result, even if the EGR rate is increased, the combustion can be prevented from being destabilized. Since the EGR rate can be increased under a partial load, the fuel consumption performance of the internal combustion engine can be improved.

According to yet still another embodiment of the present invention, the rotating speed and the time change rate of the rotating speed are detected on the basis of the crank angle sensor, the torque of the internal combustion engine is estimated on the basis of the time change rate of the rotating speed, the opening of the flow enhancement valve is controlled to enhance the flow according to the increase in fluctuation of the torque of the internal combustion engine, and the ignition timing is corrected on the basis of the rotating speed, the intake air quantity flowing into the cylinder, and the turbulent intensity index within the cylinder. As a result, the torque fluctuation caused by the destabilized combustion can be prevented.

According to yet still another embodiment of the present invention, the intake air quantity flowing into the cylinder is calculated on the basis of the intake air quantity detected by the air flow sensor, the rotating speed, and the operating state of the flow enhancement valve, and the fuel injection quantity is calculated on the basis of the rotating speed, the intake air quantity flowing into the cylinder, and the target air-fuel ratio. As a result, even when the opening of the flow enhancement valve is transiently changed, the air-fuel ratio can be suitably controlled taking the transient behavior of the intake air quantity flowing into the cylinder into account. For that reason, the fuel consumption, the power, and the exhaust performance of the internal combustion engine when the opening of the flow enhancement valve is transiently changed can be prevented from being deteriorated.

According to yet still another embodiment of the present invention, the intake air quantity flowing into the cylinder is calculated on the basis of the intake air quantity detected by the air flow sensor, the rotating speed, the operating state of the flow enhancement valve, and the operating state of the variable valve mechanism, and the fuel injection quantity is calculated on the basis of the rotating speed, the intake air quantity flowing into the cylinder, and the target air-fuel ratio. As a result, the intake variable valve mechanism is set to a variety of operating states, and even when the opening of the flow enhancement valve is transiently changed, the air-fuel ratio can be suitably controlled taking the transient behavior of the intake air quantity flowing into the cylinder into account. For that reason, the fuel consumption, the power, and the exhaust performance of the internal combustion engine when the opening of the flow enhancement valve is transiently changed can be prevented from being deteriorated.

According to the control method for an internal combustion engine having the flow enhancement valve of the present invention, the intake air quantity flowing into the cylinder is calculated on the basis of the intake air quantity detected by the air flow sensor, the rotating speed, and the operating state of the flow enhancement valve. Then, the turbulent intensity index within the cylinder is calculated on the basis of the rotating speed, the intake air quantity flowing into the cylinder, and the operating state of the flow enhancement valve. Further, the ignition timing is calculated on the basis of the rotating speed, the intake air quantity flowing into the cylinder, and the turbulent intensity index. Even when the opening of the flow enhancement valve is transiently changed, the ignition timing can be suitably controlled taking the intake air quantity flowing into the cylinder, and the transient behavior of the turbulent intensity index within the cylinder into account. For that reason, the fuel consumption, the power, and the exhaust performance of the internal combustion engine when the opening of the flow enhancement valve is transiently changed can be prevented from being deteriorated.

List of Reference Signs

| | |
|---|---|
| 1, | internal combustion engine |
| 2, | air flow sensor and intake temperature sensor |
| 3, | throttle valve |
| 4, | intake manifold |
| 5, | flow enhancement valve |
| 6, | intake variable valve mechanism |
| 7, | variable valve position sensor |
| 8, | fuel injection valve |
| 9, | ignition plug |
| 10, | exhaust variable valve mechanism |
| 11, | variable valve position sensor |
| 12, | air-fuel ratio sensor |
| 13, | exhaust purification catalyst |
| 14, | knock sensor |
| 15, | crank angle sensor |
| 16, | external EGR pipe |
| 17, | external EGR valve |
| 18, | circulating water temperature |
| 19, | ECU(Electronic Control Unit) |

**Claims**

1. A control device for an internal combustion engine having a flow enhancement valve, the control device comprising: an intake air quantity calculation unit that calculates an intake air quantity flowing into a cylinder on the basis of the intake air quantity detected by an air flow sensor, a rotating speed, and an operating state of the flow enhancement valve; a turbulent intensity calculation unit that calculates an index of a turbulent intensity within the cylinder on the basis of the rotating speed, the intake air quantity flowing into the cylinder, and the operating state of the flow enhancement valve; and an ignition timing calculation unit that calculates an ignition timing on the basis of the rotating speed, the intake air quantity flowing into the cylinder, and the turbulent intensity index.

2. The control device for an internal combustion engine according to claim 2,
wherein the internal combustion engine includes a variable valve mechanism for an intake valve, and
wherein the intake air quantity calculation unit calculates the intake air quantity flowing into the cylinder further taking an operating state of the variable valve mechanism into account, and the turbulent intensity calculation unit calculates the index of the turbulent intensity further taking the operating state of the variable valve mechanism into account.

3. The control device for an internal combustion engine according to claim 1 or 2, further comprising: a flow enhancement valve control unit that controls the flow enhancement valve; and an ignition timing correction unit that corrects the ignition timing.

4. The control device for an internal combustion engine according to claim 3,
wherein the variable valve mechanism has a variable maximum lift and a variable phase,
wherein the flow enhancement valve control unit controls the opening of the flow enhancement valve to enhance the flow by the variable valve mechanism, according to a decrease in the maximum lift or an advance of a valve close timing,
wherein the turbulent intensity calculation unit calculates the turbulent intensity index within the cylinder on the basis of the rotating speed, the intake air quantity flowing into the cylinder, the operating state of the flow enhancement valve, and the operating state of the intake variable valve mechanism, and
wherein the ignition timing correction unit corrects the ignition timing on the basis of the rotating speed, the intake air quantity flowing into the cylinder, and the turbulence intensity index within the cylinder.

5. The control device for an internal combustion engine according to claim 3, further comprising: a unit for estimating a warm-up state of the internal combustion engine on the basis of a circulating water temperature,
wherein the flow enhancement valve control unit controls the opening of the flow enhancement valve to enhance the flow on the basis of the warm-up state of the internal combustion engine in a cold state where the warm-up state of the internal combustion engine is equal to or lower than a given value, and
wherein the ignition timing correction unit corrects the ignition speed to be retarded on the basis of the warm-up state, the rotating speed, the intake air quantity flowing into the cylinder, and the turbulent intensity index within the cylinder.

6. The control device for an internal combustion engine according to claim 3, further comprising: a unit for determining whether a knock is present, or not, on the basis of a knock sensor,
wherein the flow enhancement valve control unit controls the opening of the flow enhancement valve to enhance the flow when the knock is detected, and
wherein the ignition timing correction unit corrects the ignition speed on the basis of a detection result of the knock sensor, the rotating speed, the intake air quantity flowing into the cylinder, and the turbulent intensity index within the cylinder.

7. The control device for an internal combustion engine according to claim 3, further comprising: a unit for estimating an EGR rate on the basis of an EGR valve opening,
wherein the flow enhancement valve control unit controls the opening of the flow enhancement valve to enhance the flow according to an increase in the EGR rate with the use of the EGR valve, and
wherein the ignition timing correction unit corrects the ignition timing on the basis of the EGR rate, the rotating speed, the intake air quantity flowing into the cylinder, and the turbulent intensity index within the cylinder.

8. The control device for an internal combustion engine according to claim 3, further comprising: a unit for estimating a torque of the internal combustion engine on the basis of a time change rate of the rotating speed,
wherein the flow enhancement valve control unit controls the opening of the flow enhancement valve to enhance the flow according to an increase in fluctuation of the torque of the internal combustion engine, and
wherein the ignition timing correction unit corrects the ignition timing on the basis of the rotating speed, the intake air quantity flowing into the cylinder, and the turbulent intensity index within the cylinder.

9. A control device for an internal combustion engine having a flow enhancement valve, the control device comprising:
an intake air quantity calculation unit that calculates an intake air quantity flowing into a cylinder on the basis of the intake air quantity detected by an air flow sensor, a rotating speed, and an operating state of the flow enhancement valve; a turbulent intensity calculation unit that calculates an index of a turbulent intensity within the cylinder on the basis of the rotating speed, the intake air quantity flowing into the cylinder, and the operating state of the flow enhancement valve; and a fuel injection quantity calculation unit that calculates a fuel injection quantity on the basis of the rotating speed, the intake air quantity flowing into the cylinder, and a target air-fuel ratio.

10. The control device for an internal combustion engine according to claim 9,
    wherein the internal combustion engine includes a variable valve mechanism for an intake valve, and
    wherein the intake air quantity calculation unit calculates the intake air quantity flowing into the cylinder further taking an operating state of the variable valve mechanism into account, and the turbulent intensity calculation unit calculates the index of the turbulent intensity further taking the operating state of the variable valve mechanism into account.

11. A control device for an internal combustion engine having a flow enhancement valve, the control device comprising: an intake air quantity calculation unit that calculates an intake air quantity flowing into a cylinder on the basis of the intake air quantity detected by an air flow sensor, a rotating speed, and an operating state of the flow enhancement valve; a turbulent intensity calculation unit that calculates an index of a turbulent intensity within the cylinder on the basis of the rotating speed, the intake air quantity flowing into the cylinder, and the operating state of the flow enhancement valve; an ignition timing calculation unit that calculates an ignition timing on the basis of the rotating speed, the intake air quantity flowing into the cylinder, and the turbulent intensity index; and a fuel injection quantity calculation unit that calculates a fuel injection quantity on the basis of the rotating speed, the intake air quantity flowing into the cylinder, and a target air-fuel ratio.

12. A control method for an internal combustion engine having a flow enhancement valve, the control method comprising: calculating an intake air quantity flowing into a cylinder on the basis of the intake air quantity detected by an air flow sensor, a rotating speed, and an operating state of the flow enhancement valve; calculating a turbulent intensity index within the cylinder on the basis of the rotating speed, the intake air quantity flowing into the cylinder, and the operating state of the flow enhancement valve; and calculating an ignition timing on the basis of the rotating speed, the intake air quantity flowing into the cylinder, and the turbulent intensity index.

13. The control method for an internal combustion engine according to claim 12,
    wherein a fuel injection quantity is calculated on the basis of the rotating speed, the intake air quantity flowing into the cylinder, and the target air-fuel ratio.

# FIG.1

# FIG.2

# F I G . 3

(a)

LIFT

(b)

LIFT

LARGE
LIFT

SMALL
LIFT

TDC
IVO

BDC

IVC

# FIG.4

# FIG.5

$$\frac{dG_{afs}}{dt}\left(=\frac{dG_{th}}{dt}\right)$$

AIR FLOW SENSOR (AFS) 2

$$\frac{dG_{cyl}}{dt}$$

20 FLOW
ENHANCEMENT VALVE 5                21

$p_0\ T_0$

$p_{in}\ T_{in}\ V_{in}$

—10

—6

THROTTLE
VALVE 3

4

FUEL INJECTION
VALVE 8

—1

$p$ :PRESSURE

$T$ :TEMPERATURE

$V$ :VOLUME

$\frac{dG}{dt}$ :MASS FLOW

# FIG.6

(a)

LOAD

WITHOUT FLOW
ENHANCEMENT CONTROL

WITH FLOW
ENHANCEMENT
CONTROL

OPEN

CLOSE

CHANGEOVER OF
ENHANCEMENT VALVE 5

ROTATING SPEED

(b)

LOAD

OPEN

FLOW
ENHANCEMENT
VALVE 5

CLOSE

ROTATING SPEED

# F I G . 7

(a)

(b)

(c)

# FIG.8

(a)

TUMBLE RATIO/ SWIRL RATIO

CLOSE    FLOW ENHANCEMENT    OPEN
         VALVE OPENING

(b)

TURBULENT SCALE

TUMBLE RATIO/SWIRL RATIO

(d)

COMPRESSION TOP DEAD CENTER TURBULENT INTENSITY

CLOSE    FLOW ENHANCEMENT    OPEN
         VALVE OPENING

(c)

DAMPING RATE OF TURBULENT ENERGY

TURBULENT SCALE

# F I G . 9

(a)

(b)

(c)

# FIG.10

(a)

(b)

(d)

(c)

OPERATING
POINT A

(e)

OPERATING
POINT B

# FIG.11

(a)

CHARGING EFFICIENCY

× OPERATING POINT B

× OPERATING POINT A

ROTATING SPEED

(b)

TURBULENT COMBUSTION SPEED

CLOSE    FLOW ENHANCEMENT   OPEN
VALVE OPENING

(d)

TURBULENT COMBUSTION SPEED

CLOSE    FLOW ENHANCEMENT   OPEN
VALVE OPENING

(c)

RETARD

IGNITION TIMING

ADVANCE
CLOSE    FLOW ENHANCEMENT   OPEN
VALVE OPENING

OPERATING
POINT A

(e)

RETARD

IGNITION TIMING

ADVANCE
CLOSE    FLOW ENHANCEMENT   OPEN
VALVE OPENING

OPERATING
POINT B

# FIG.12

ROTATING
SPEED

ATMOSPHERIC
PRESSURE

FLOW
ENHANCEMENT
VALVE

ATMOSPHERIC
TEMPERATURE

AIR FLOW
SENSOR
(AFS) 2

CHARGING
EFFICIENCY
CALCULATION
UNIT ~121

MASS FLOW
CONVERSION
UNIT ~122

INTAKE PIPE
PRESSURE
TIME CHANGE
RATE
CALCULATION
UNIT ~123

Δt

1/z

INTAKE PIPE
PRESSURE
TIME CHANGE
RATE
CALCULATION
UNIT ~124

Δt

1/z

COMPRESSION
TOP DEAD
CENTER
TURBULENT
INTENSITY
CALCULATION
UNIT ~125

IGNITION
TIMING
CALCULATION
UNIT

IGNITION
TIMING

~126

# FIG.13

# FIG.14

(a)

FLOW ENHANCEMENT VALVE

FULLY OPENED

FULLY CLOSED

(b)

MASS FLOW RATE

$$\frac{dG_{afs}}{d_t}$$

$$\frac{dG_{cyl}}{d_t}$$

(c)

COMPRESSION TOP DEAD CENTER TURBULENT INTENSITY

(d) RETARD SIDE

IGNITION TIMING

ADVANCE SIDE

CONSIDER ONLY INFLUENCE OF FLOW ENHANCEMENT VALUE OPENING

CONTROL BASED ON AFS DETECTION RESULT

CONSIDER INFLUENCE OF FLOW ENHANCEMENT VALVE OPENING ON TURBULENT INTENSITY AND CHARGING EFFICIENCY

(e)

FUEL INJECTION QUANTITY

CONTROL BASED ON AFS DETECTION RESULT

CONSIDER INFLUENCE OF FLOW ENHANCEMENT VALVE OPENING ON CHARGING EFFICIENCY

(f)

AIR-FUEL RATIO

CONSIDER INFLUENCE OF FLOW ENHANCEMENT VALVE OPENING ON CHARGING EFFECIENCY

LEAN SIDE

THEORETICAL AIR FUEL RATIO

CONTROL BASED ON AFS DETECTION RESULT

FUEL RICH SIDE

TIME

# FIG.15

(a) FLOW ENHANCEMENT VALVE

FULLY OPENED

FULLY CLOSED

(b) MASS FLOW RATE

$\dfrac{dG_{cyl}}{dt}$

$\dfrac{dG_{afs}}{d_t}$

(c) COMPRESSION TOP DEAD CENTER TURBULENT INTENSITY

(d) IGNITION TIMING

RETARD SIDE

CONSIDER INFLUENCE OF FLOW ENHANCEMENT VALVE OPENING ON TURBULENT INTENSITY AND CHARGING EFFICIENCY

CONTROL BASED ON AFS DETECTION RESULT

CONSIDER ONLY INFLUENCE OF FLOW ENHANCEMENT VALUE OPENING

ADVANCE SIDE

(e) FUEL INJECTION QUANTITY

CONSIDER INFLUENCE OF FLOW ENHANCEMENT VALVE OPENING ON CHARGING EFFICIENCY

CONTROL BASED ON AFS DETECTION RESULT

(f) AIR-FUEL RATIO

CONTROL BASED ON AFS DETECTION RESULT

LEAN SIDE

CONSIDER INFLUENCE OF FLOW ENHANCEMENT VALVE OPENING ON CHARGING EFFECIENCY

THEORETICAL AIR FUEL RATIO

TIME

FUEL RICH SIDE

# FIG.16

(a)

INTAKE PIPE PRESSURE

×OPERATING
POINT A

×OPERATING
POINT B

ROTATING SPEED

(b)

VALVE LIFT

TDC          BDC

(c)

CHARGING EFFICIENCY

CLOSE   FLOW ENHANCEMENT   OPEN
VALVE OPENING

(e)

CHARGING EFFICIENCY

CLOSE   FLOW ENHANCEMENT   OPEN
VALVE OPENING

(d)

COMPRESSION TOP DEAD CENTER TURBULENT INTENSITY

CLOSE   FLOW ENHANCEMENT   OPEN
VALVE OPENING

OPERATING POINT A

(f)

COMPRESSION TOP DEAD CENTER TURBULENT INTENSITY

CLOSE   FLOW ENHANCEMENT   OPEN
VALVE OPENING

OPERATING POINT B

# FIG.17

ROTATING SPEED

ATMOSPHERIC PRESSURE

VARIABLE VALVE

FLOW ENHANCEMENT VALVE

ATMOSPHERIC TEMPERATURE

AFS

171

CHARGING EFFICIENCY CALCULATION UNIT

172

MASS FLOW CONVERSION UNIT

173

INTAKE PIPE PRESSURE TIME CHANGE RATE CALCULATION UNIT

Δt

+ +

1/z

174

INTAKE PIPE TEMPERASTURE TIME CHANGE RATE CALCULATION UNIT

Δt

+ +

1/z

COMPRESSION TOP DEAD CENTER TURBULENT INTENSITY CALCULATION UNIT

175

IGNITION TIMING CALCULATION UNIT

IGNITION TIMING

177

# FIG.18

ROTATING
SPEED

ATMOSPHERIC
PRESSURE

VARIABLE VALVE

FLOW
ENHANCEMENT
VALVE

ATMOSPHERIC
TEMPERATURE

AFS

TARGET
AIR-FUEL RATIO

CIRCULATING
WATER
TEMPERATURE

181

CHARGING
EFFICIENCY
CALCULATION
UNIT

182

MASS FLOW
RATE
CONVERSION
UNIT

183

INTAKE PIPE
PRESSURE
TIME CHANGE
RATE
CALCULATION
UNIT

Δt

+
+

1/z

184

INTAKE PIPE
TEMPERATURE
TIME CHANGE
RATE
CALCULATION
UNIT

Δt

+
+

1/z

FUEL
INJECTION
QUANTITY
CALCULATION
UNIT

185

FUEL
INJECTION
QUANTITY

# FIG.19

(a) FLOW ENHANCEMENT VALVE

FULLY OPENED

FULLY CLOSED

(b) MASS FLOW RATE

$$\frac{dG_{cyl}}{dt}$$

$$\frac{dG_{afs}}{d_t}$$

(c) COMPRESSION TOP DEAD CENTER TURBULENT INTENSITY

(d) RETARD SIDE

IGNITION TIMING

ADVANCE SIDE

CONSIDER INFLUENCE OF FLOW ENHANCEMENT VALVE OPENING ON TURBULENT INTENSITY AND CHARGING EFFICIENCY

CONTROL BASED ON AFS DETECTION RESULT

CONSIDER ONLY INFLUENCE OF FLOW ENHANCEMENT VALUE OPENING

(e) FUEL INJECTION QUANTITY

CONSIDER INFLUENCE OF FLOW ENHANCEMENT VALVE OPENING ON CHARGING EFFICIENCY

CONTROL BASED ON AFS DETECTION RESULT

(f) AIR-FUEL RATIO

CONTROL BASED ON AFS DETECTION RESULT

CONSIDER INFLUENCE OF FLOW ENHANCEMENT VALVE OPENING ON CHARGING EFFECIENCY

LEAN SIDE

THEORETICAL AIR FUEL RATIO

TIME

FUEL RICH SIDE

# FIG.20

(a) FLOW ENHANCEMENT VALVE

FULLY OPENED

FULLY CLOSED

(b) MASS FLOW RATE

$\dfrac{dG_{afs}}{d_t}$

$\dfrac{dG_{cyl}}{d_t}$

(c) COMPRESSION TOP DEAD CENTER TURBULENT INTENSITY

(d) IGNITION TIMING

RETARD SIDE

ADVANCE SIDE

CONTROL BASED ON AFS DETECTION RESULT

CONSIDER ONLY INFLUENCE OF FLOW ENHANCEMENT VALUE OPENING

CONSIDER INFLUENCE OF FLOW ENHANCEMENT VALVE OPENING ON TURBULENT INTENSITY AND CHARGING EFFICIENCY

(e) FUEL INJECTION QUANTITY

CONSIDER INFLUENCE OF FLOW ENHANCEMENT VALVE OPENING ON CHARGING EFFICIENCY

CONTROL BASED ON AFS DETECTION RESULT

(f) AIR-FUEL RATIO

CONSIDER INFLUENCE OF FLOW ENHANCEMENT VALVE OPENING ON CHARGING EFFECIENCY

CONTROL BASED ON AFS DETECTION RESULT

LEAN SIDE

THEORETICAL AIR FUEL RATIO

FUEL RICH SIDE

TIME

36

# FIG.21

<div align="center">**INTERNATIONAL SEARCH REPORT**</div>

| International application No. |
| --- |
| PCT/JP2011/070120 |

**A. CLASSIFICATION OF SUBJECT MATTER**
*F02P5/15*(2006.01)i, *F02B29/08*(2006.01)i, *F02D13/02*(2006.01)i, *F02D21/08* (2006.01)i, *F02D41/04*(2006.01)i, *F02D43/00*(2006.01)i, *F02D45/00*(2006.01)i

According to International Patent Classification (IPC) or to both national classification and IPC

**B. FIELDS SEARCHED**

Minimum documentation searched (classification system followed by classification symbols)
F02P5/15, F02B29/08, F02D13/02, F02D21/08, F02D41/04, F02D43/00, F02D45/00

Documentation searched other than minimum documentation to the extent that such documents are included in the fields searched
Jitsuyo Shinan Koho 1922-1996 Jitsuyo Shinan Toroku Koho 1996-2011
Kokai Jitsuyo Shinan Koho 1971-2011 Toroku Jitsuyo Shinan Koho 1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2005-226655 A (Toyota Motor Corp.), 25 August 2005 (25.08.2005), paragraphs [0125] to [0128] (Family: none) | 1-8,12,13 |
| Y | JP 2009-24684 A (Denso Corp.), 05 February 2009 (05.02.2009), claim 1 (Family: none) | 1-8,12,13 |
| Y | JP 2002-89338 A (Unisia Jecs Corp.), 27 March 2002 (27.03.2002), paragraph [0062] (Family: none) | 1-13 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 October, 2011 (06.10.11) | 18 October, 2011 (18.10.11) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
|---|
| PCT/JP2011/070120 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 11-182312 A  (Nissan Motor Co., Ltd.), 06 July 1999 (06.07.1999), paragraphs [0017], [0020], [0040] & US 6273056 B1         & EP 924416 A2 | 5-8 |
| Y | JP 2010-185300 A  (Toyota Motor Corp.), 26 August 2010 (26.08.2010), paragraph [0212] (Family: none) | 9-11,13 |

Form PCT/ISA/210 (continuation of second sheet) (July 2009)

**EP 2 617 984 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009024684 A